(19) Europäisches Patentamt

European Patent Office

Office européen des brevets

(11) **EP 1 691 334 A1**

(12) **EUROPEAN PATENT APPLICATION**
published in accordance with Art. 158(3) EPC

(43) Date of publication:
16.08.2006 Bulletin 2006/33

(51) Int Cl.:
*G06T 9/20* (2006.01)     *G06T 1/20* (2006.01)

(21) Application number: 03774415.8

(22) Date of filing: **13.11.2003**

(86) International application number:
**PCT/RU2003/000485**

(87) International publication number:
**WO 2004/095375 (04.11.2004 Gazette 2004/45)**

(84) Designated Contracting States:
**AT BE BG CH CY CZ DE DK EE ES FI FR GB GR HU IE IT LI LU MC NL PT RO SE SI SK TR**

(30) Priority: **21.04.2003 RU 2003111204**

(71) Applicants:
• **Obschestvo S Ogranichennoy Otvetstvennostyu " Mir Setei"**
  **Moscow, 113042 (RU)**

• **Obschestvo S Ogranichennoy Otvetsvennostyu " R.T.S.-Servis"**
  **St. Petersburg 198261 (RU)**

(72) Inventor: **GNITSEVICH, Aleksandr Vitalevich**
**Moscow, 113303 (RU)**

(74) Representative: **Jannig, Peter**
**Jannig & Repkow,**
**Patentanwälte,**
**Klausenberg 20**
**86199 Augsburg (DE)**

(54) **METHOD FOR ENCODING CO-ORDINATES OF A VIDEO IMAGE MOVING ALONG THE DISPLAY OF A COMPUTING DEVICE**

(57)     The method consists in displaying a videoframe having at least one image of a visual object (VO) on a monitor screen and in dividing said videoframe with the VO into XxY cells. According to said method, an intraframe encoding is carried out by selecting characteristic cells which coincide with VO contour and in which said VO contour is exposed to the modification of the shape thereof. Said contour modification between the characteristic cells is approximated with the aid of mathematical expressions between checkpoints. A local system of coordinate X' and Y' X is introduced. The checkpoint massdata is stored in a card after intraframe encoding. Thus encoded array of the checkpoint shifts is used for forming the interframe encoding mass-data storage. A device for decoding the visual object encoded by said method and a system for visualizing the active video with the aid of said device are also disclosed.

Fig.1

**Description**

The invention refers to computer techniques and can be used in computer system of active video (AV) or Hyper Video (HV) as well as in areas as interactive TV, video on demand, TV broadcasting via Internet, interactive tutors, video guides, personal mobile communications, computer and TV games and the like.

A method and technique of video and hyperlinks integration is known in the art, in which the operation of coordinate coding of video image, moving at the computer monitor screen, consists in displaying of video frame with the image of at least one visual object (VO), approximating of visual object by means of marking by geometrical figure of simple shape, for example by a circle, an oval, a rectangle, polygon, marking of separate key frames by means of authoring tools, and in linear interpolation of areas of marking (a circle, an oval, a rectangle) to the rest intermediate frames (International Application PCT WO (98/44335, G 06 F 17/30, pub. 1998)).

This technical solution gives an ability of compact marking data storage, but reduces VO marking accuracy. At that process of marking other then key frames is impossible here.

Marking regions at the key frames are linearly interpolated to the intermediate frames during the reproduction of the file, received after decoding. Thus a linear interpolation of regions of marking at other then key intermediate frames and approximation of VO by a simple geometrical figure may result lack of coincidence of VO marking with the location and with the existing actual shape of VO both at key frames and especially at intermediate frames, because in practice VO can both change its geometrical shape at intermediate video frames and move not along straight line. This causes inadequacy of a video image coding. On further decoding, for example for video playback, when VO marking is not visible on the computer screen and it is not identified, what frame is taken as key frame, and what is taken as intermediate one, it's impossible to determine, if the actual VO image shape and its location correspond to approximated ones. It results in further difficulties, for example, in case of activation of such object by the manipulator (mouse) click, because the mouse cursor position in fact may not coincide with the VO, especially at the intermediate frames.

"Parallel Active Video Computer System", realizing particularly the method of coordinate coding of video image, moving at the computer screen, the closest to the declared one, is also known in the art. (Utility Patent of Russian Federation №2173883, G 06 T 1/20, pub. 2001).

The method of coordinate coding of video image, moving at the computer screen includes displaying of video frame with the image of at least one VO to a monitor. The video frame with the visual object is divided into X x Y cells, where X and Y - 0,1,2, ..., having the shape of elementary squares or rectangles. The cells, with position, coinciding and not coinciding at video image with the location of visual objects, are selected by marking of the cells, coinciding with the position of the visual object cells by the corresponding symbol and by marking of the cells, which position doesn't coincide with the position of the visual object cells by another cell symbol. At intraframe coding data array of the map for the visual object of the present video frame is formed, and if the position of the visual object in the following video frame remains permanent, for said video frames the data array of the visual object of the previous video frame is saved at forming of the new map, but if the position of the visual object in the following video frame changes, for such video frames the data array of the visual object is changed at forming of the new map. The file, created by the map order, where each map corresponds to at least one video frame of the video file, is generated and saved.

The limitations of this technical solution are the following:

The necessity of use cells with zero, not coinciding with positions of active objects, at intraframe coding. This fact increases the data array at the map creation.

Coding of all VO cells in X,Y coordinates for forming of VO map is necessary at identification and selecting of cells ,which position coincides with the position of the active object. This fact considerably increases the data array, as well.

The lack of interframe coding, which results in redundancy of saved data.

Thus, the main limitation of this method of coding of VO coordinates is low coding rate and large amount of saved map data for each video frame.

The targets of the present invention are coding method, decoding device and system, where storing of coordinates of all VO cells at first and the following video frames is not required, if VO marking and its position coincide with really existing ones, and therefore the increasing of the performance and the rate of VO coordinate coding and the decreasing of saved data arrays, as well as providing of the opportunity of the decoding of visual object, coded by the declared method by means of the corresponding device and providing of the opportunity of the work of the device in the system of active video.

The technical result of the present invention as a method is minimizing of memory capacity, necessary for storing and processing of VO marking, reduction of saved data while video frame coding with several VO.

The technical result of the present invention as a device execution is the providing of decoding of visual object, coded by the declared method, with maximal efficiency.

The technical result of the present invention as a system execution is the providing of active video playback, coming from different communication channels in real-time mode.

To obtain the said technical result the known method of coordinate coding of video image, moving at the computing device screen, comprising displaying of video frame with the image of at least one VO, divided into X x Y cells, where X and Y - 0, 1, 2, ..., having the shape of elementary squares or rectangles, selection of cells which position coincides or doesn't coincide at video frame with the position of visual objects, by marking the cells, coinciding with position of VO cells with the corresponding symbol, and by marking the cells, which position doesn't coincide with the position of the visual object cells by the other cell symbol, intraframe coding with forming of data array of map for visual object of the present video frame, and if the position of the visual object in the following video frame remains permanent, the data array of visual object of the previous video frame is saved at forming of the new map for such video frames, but if the position of the visual object in the following video frame changes, the data array of visual object for such video frames is changed at forming of the new map, forming and saving of the file, created by the map consequence, where every map corresponds to at least one video frame of the file, according to the invention should be completed with the intraframe coding by selecting of the characteristic cells, coinciding with the visual object contour, and where the visual object contour undergoes changes of the shape, checkpoint coordinates - centres of the characteristic cells - are measured , while the change of the visual object contour between checkpoints is approximated, the local X' and Y' coordinate system, characterized by fewer quantity of cells than the X and Y coordinate system and where the centre of one of the cells is taken as a origin of X' and Y' coordinate system, and axes direction of which is parallel to X and Y direction, is created, at intraframe coding the data array of checkpoints in the local X' and Y' coordinate system is created at the map and saved, and if the position of the visual object in the following video frame remains permanent, the data array of checkpoints of the previous video frame in local X' and Y' coordinate system is saved for such video frames at forming of the new map, but if the geometrical shape and/or the position of the visual object in the following video frame changes, its interframe coding is realized, and if the position of the visual object cells changes in the following video frame in the local X' and Y' coordinate system, but it's contour is saved, then parameters of the displacement vector for every checkpoint of the visual object are introduced into the data array of the map of the following video frame, if the contour changes in the local X' and Y' coordinate system, the mentioned intraframe coding of this video frame is performed and the data array of checkpoints of the new video frame is obtained, further the displacements of the checkpoints, corresponding to each other in the local X' and Y' coordinate system are determined.

The additional variants of realizing of the method are advisable under the following conditions:

- in the local X' and Y' coordinate system the visual object is geometrically limited by the rectangle, which consists of the same cells as in X and Y coordinate system, the visual object is inscribed in the said rectangle, the centre of X' and Y' coordinates origin is situated in the centre of the corner cell of the rectangle and the axes direction coincides with the direction of X and Y coordinate system;
- piecewise-linear approximation is used at approximation;
- Bezje curves are used at approximation;
- cubic splines are used at approximation;
- marking of the characteristic cells of the visual object at intraframe coding is realized by means of hand marking;
- at the intraframe coding marking of the characteristic cells of the visual object is realized by the way of pointing of several characteristic cells on the contour of visual object by means of tools of hand marking with automatic detection of checkpoints of these characteristic cells, other checkpoints are automatically detected according to the visual characteristics of the visual object;
- at the interframe coding the length of the displacement code in the X'-direction and Y'-direction for the following video frame is calculated according to checkpoint displacement array, and the displacement code in X'-direction and Y'-direction is used as the data array of the interframe coding;
- the data array of the interframe coding is compressed by adding to stored data array only data about displaced checkpoints along with corresponding displacement code thereof;
- the data array of the interframe coding is compressed by using of binary vector;
- after compression by using of binary vector the analysis of the displacement of the checkpoints, displaced in the same direction within the same distance, is realized, such checkpoints are clustered in groups of sequentially situated checkpoints, then said groups are coded pointing the number of checkpoints and their common displacement code;
- the data array of the interframe coding is compressed by using of the linked list;
- after compression, using of the linked list the analysis of the displacements of checkpoints, displaced in the same direction within the same distance is realized, such checkpoints are clustered in groups of sequentially situated checkpoints and said groups are coded pointing the number of checkpoints and their common displacement code;
- data array of intraframe coding and data array of interframe coding are compared in each video frame for the visual object, and if the data array of intraframe coding being smaller than the data array of interframe coding, the correspponding checkpoints data array of intraframe coding is saved in the map of this video frame, and it is used for forming of data array of interframe coding of the next (further) frames.

Since the declared method of coding has not been known in the art, no prior art is found for the declared device and the declared system.

SUMMARY OF THE INVENTION

The declared technical result may be achieved by the device for decoding of the coded visual object containing the following units: PCI bus controller kernel, kernel of controller of direct memory access, register of base address, state counter, instruction register, memory access unit from the direction of PCI controller, unit for building of visual object contour according to the checkpoints, where the visual object contour undergoes changes of the shape, control unit for the unit of building of the visual object contour, unit for filling the area inside the contour of visual object, memory controller, memory stream s commutator, unit of logical integration of data ready signals according to OR, trigger of ready signals of register data, inputs/outputs of the mentioned units are connected by buses by typical contacts for the mentioned units, and the unit for building of the visual object contour is assigned for creation of the visual object contour according to the checkpoints and executed with the ability of checkpoints coordinates receiving from the PCI bus, approximation of the visual object contour and the data array of all contour points transmitting to ZBT bus, unit for filling the area inside the contour of visual object is assigned for marking of the cells inside the visual object contour and implemented with the ability of receiving of the data array about all screen points from the ZBT bus, the ability of selection of visual object contour points and points, situated inside the visual object contour, to ZBT bus, control unit for the unit of building of the visual object contour is realized with the ability of supporting of the order of the checkpoint coordinates order at their delivery to the unit for building of visual object contour.

The declared technical result may be achieved by the system of active video visualization contains network controller, assigned for receiving of digital video stream and sending of command traffic to active video server, TV receiver, assigned for receiving of digital video stream from television centre, central processing unit, video decoder, assigned for decoding of input video stream in real time mode and output on the display device, audio decoder, assigned for decoding of input digital audio data stream and its output on the outer system of sound reproduction, device for decoding of the encoded according to checkpoints visual object and marking of the cells inside the visual object contour, storage device, assigned for storing of video or audio data, active video data and the system information, user interface, connected with the PCI system bus.

The said advantages and distinctive features of the present invention are explained by the preferred embodiments with the links to the attached figures.

BREEF DESCRIPTION OF THE DRAWINGS.

Fig.1 represents video frame with the visual object (VO);
Fig.2 - the same as fig.1 with VO, inscribed in the rectangle.
Fig.3 - the contour (border) forming of VO, where the displacement of one checkpoint relatively to another is shown by the arrows.
Fig.4 - video frame with the common VO displacement without changing of shape.
Fig.5 - video frame with the VO displacement with changing of shape.
Fig.6 - video frame with the common displacement of the group of the VO contour checkpoints.
Fig.7 - VO data coding format in interframe coding.
Fig.8 - VO with changing of the shape for interframe coding illustration.
Fig.9 - flowchart of intraframe coding algorithm
Fig.10 - flowchart of interframe coding algorithm.
Fig.11 - flow chart of the VO decoding device.
Fig.12 - unit for building of the VO contour on five pages.
Fig.13 - scheme of the unit for filling of the area inside VO contour on two pages.
Fig.14 - scheme of correspondence of the memory cells to image pixels.
Fig.15 - scheme of the control unit for building unit of the VO contour on two pages.
Fig.16 - format of the checkpoint description.
Fig.17 - flow diagram of the system of active video visualization.

DETAILED DISCRIPTION OF THE INVENTION

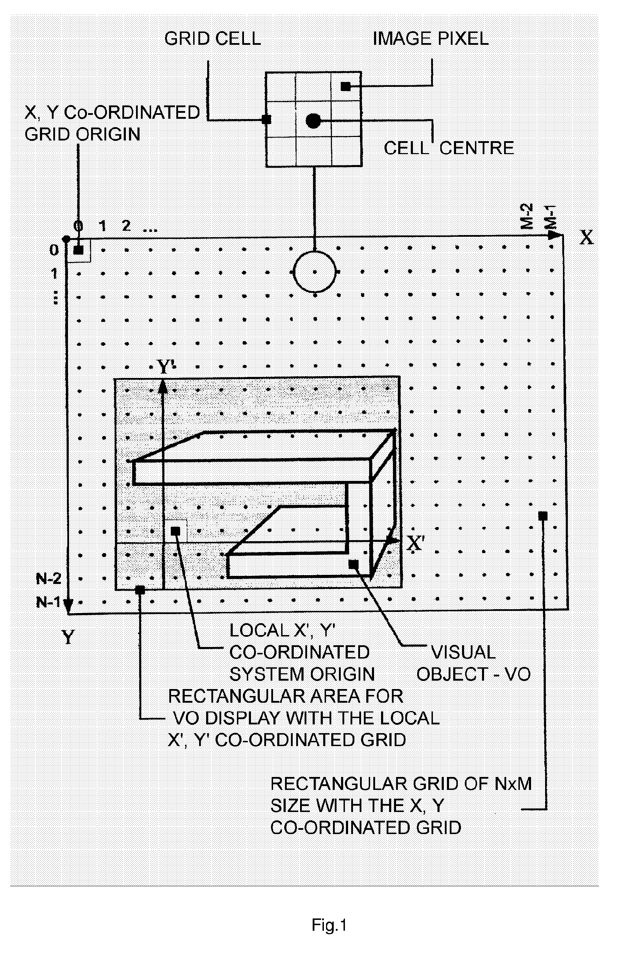

The method of coordinate coding of the video image, moving on the monitor screen, comprises output of the video frame (fig.1) with the image of at least one video object. Video frame with the visual object is divided into X and Y cells, where X and Y - 0, 1, 2, ..., having the shape of elementary squares or rectangles. The cells, with position

coinciding and not coinciding in video frame with the position of VO are selected by cells marking, coinciding with the position of VO cells, by the corresponding symbols, for example singular flag, and cells marking, which position doesn't coincide at video frame with the position of the VO cells, by other singular symbol, zero flag, for example as in the closest analogue. Intraframe coding with forming of the data array of the map for VO of the present video frame is performed.

If the VO position is remain the same in the next video frame of video file, the data array of visual object of the previous video frame is saved at forming of the new map for such video frames, but if the position of the visual object in the next video frame changes, the data array of visual object for such video frames is changed at forming of the new map. Further the file, formed by the sequence of maps, where every map corresponds to at least one video frame of the video file, is formed and saved. Intraframe coding is realized by marking out the characteristic cells (fig. 1-2), coinciding with the VO contour (fig. 1-2), in which the VO contour undergoes shape change. Checkpoint coordinates - the centres of the characteristic cells - are estimated (fig.1)

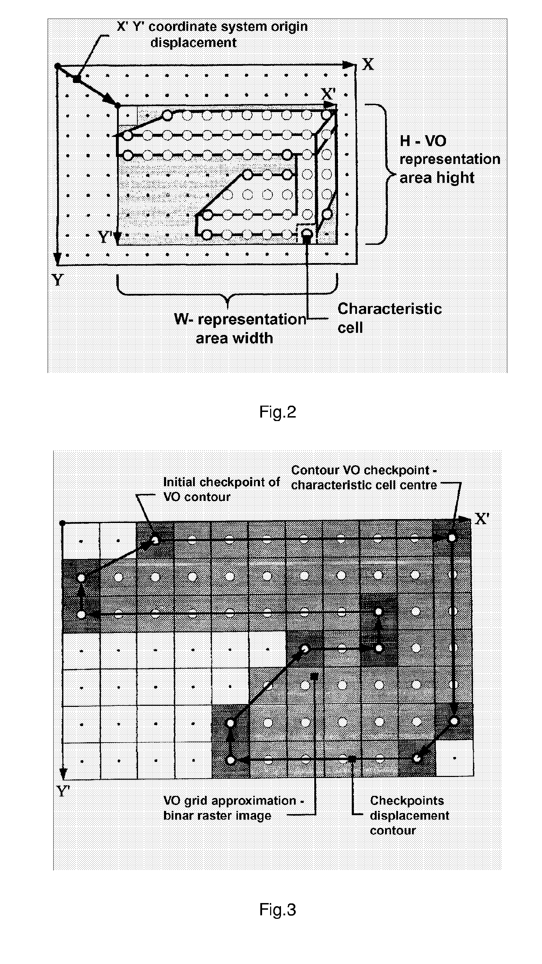

Contour change between the characteristic cells is approximated by mathematical expressions between the checkpoints (piecewise-linear approximation is shown at fig.3). The local X' and Y' coordinate system is formed (fig. 1). The local X' and Y' coordinate system may be formed in various ways, locating its centre closer to the VO. To reduce the information contents of the coded information, the VO should be limited geometrically by a rectangle, consisting of cells, and the centre of one of the cells should be taken for the origin of X' and Y' coordinate system, with the axes direction being parallel to the direction of X and Y axes, all internal points, located inside the contour, form the internal area of VO and aren't used as the checkpoints and are not coded further, they are defined by the VO contour. After intraframe coding said data array of checkpoints with mathematical expressions for the VO is saved in the video frame map.

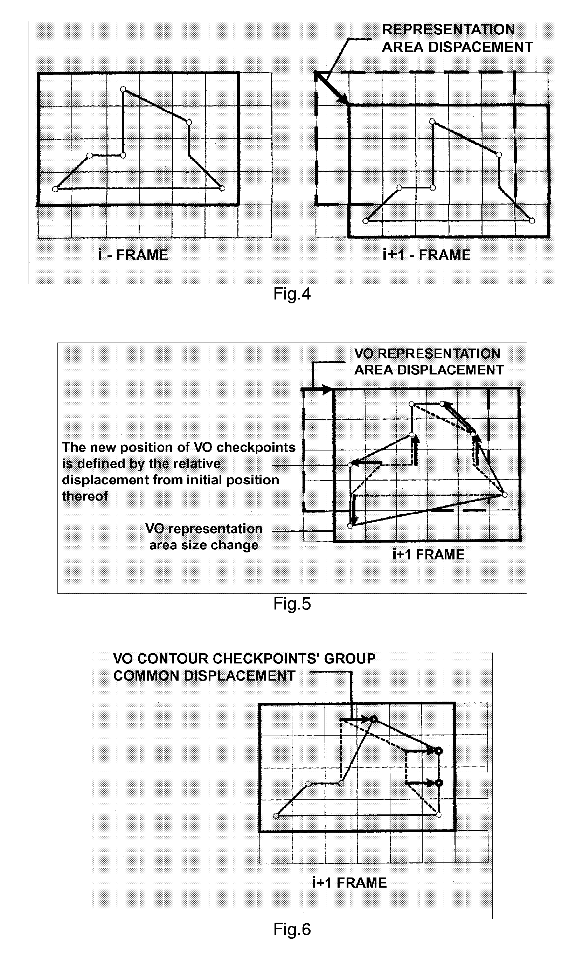

At changing of geometrical shape and/or location of VO in the following video frame (fig.4-6) its interframe coding is realized. If the location of the cells in the following video frame changes but its contour remains permanent, parameters of the displacement vector for all checkpoints are brought into the data array of the map of the following video frame (fig.4). If the location of VO cells and its contour change (fig.5-6), the mentioned intraframe coding of this video frame is realized to obtain the data array of checkpoints of the new video frame. Further the displacements of the checkpoints, corresponding to each other are determined and coded and the encoded array of these displacements of checkpoints is used for forming of the data array of interframe coding.

The example of coding of the VO displacement, shown at fig.4.

[1] the VO changes take place
[|] VO has displaced
[10] the displacement is coded by one pixel displacements
[011] the displacement code to the south-east

The example of coding of the VO displacement, shown at fig.5.

[1] the VO change takes place.
[|] VO has displaced.
[10] the displacement is coded by one pixel displacements.
[010] the displacement code to the east.

The example of coding of the VO sizes shown at fig.5.

[1] The VO change of sizes of the representation area.
[|] one pixel changes of sizes are coded.
[011] the size of each side has increased by one cell.

The example of coding of the VO shape change, shown at fig.5

[1] changes of the VO shape take place.
[00] the code of the way of shape presentation - binary vector of reference points displacements.
[1][00] coding on axes via of one pixel displacements is set.

The number of points in binary vector is known from the previous frame - it has not changed.

[0] 0 - the point has stayed at its place.
[1][111] 1 - the point has displaced to the north-west.
[1][000] 2 - the point has displaced to the north.

[0] 3 - the point has stayed at its place.
[1][100] 4 - the point has displaced to the south.
[1][110] 5 - the point has displaced to the west.
[1][000] 6 - the point has displaced to the north.

The example of coding of the common displacement of the group of VO reference points, represented at fig.6.

[1] Changes of VO shape take place.
[10] the code of the way of shape presentation - binary vector of the displacements of reference points with the common movement of groups.
[1][00] coding on the axes by one pixel displacements is set.
[011] the group of three points.
[1] has displaced.
[010] to the east.
[100] the rest four points.
[0] has not changed their position.

Two ways of saving of the data array of interframe coding, depending on the code length, are possible.

The first way of saving of the received data consists in displacements code length calculation on X' and Y' axes for the next video frame according to the checkpoints displacement array and the code of displacements on axes X' and Y' is used as the data array of the interframe coding.

The second way to save the received data consists in comparing of the data array of intraframe coding with the data array of the interframe coding. If the data array of intraframe coding smaller than the data array of interframe coding, the data array of checkpoints with the mathematical expressions of intraframe coding is saved in the map of this video frame, and it is used for forming of the data array of interframe coding.

Thus, the data received by the said first or the second way may be used as the intermediate data array, obtained for the separate video frame. If the data array of the displacement code of VO video frame exceeds the data array of this VO, obtained at intraframe coding, the result of intraframe coding is taken for the result of interframe coding. (The minimal in length code of intermediate interframe coding or the result of intraframe coding is taken for the result of VO data array of interframe coding). This kind of selection of ways is especially preferred for VO, intensely changing their shape in the next video frame. If an object changes its shape slightly, the first way is commonly used.

To reduce the length of the code, VO is inscribed into the mentioned rectangle (fig.2). The origin of the X' and Y' coordinate is located in the centre of the corner cell of the rectangle, and the direction of X' and Y' axes coincides with the direction of the X and Y coordinate system for simplicity and convenience.

Piecewise-linear approximation is used as mathematical expressions at intraframe coding. Piecewise-linear approximation is used, when the VO contour is a polygonal border or when fine detailed elaboration of VO shape is not required.

Bezje curves or cubic splines, which are preferable to use by virtue of their mathematical blending properties of contour areas, can also be used as mathematical expressions at intraframe coding. (Rogers D., Adams J. The mathematical fundamentals of computer graphics: translated from English - M: Mir, 2001, - 604 pp, ill., ISBN 5-03-002143-4, pp. 260-380).

The characteristic cells are selected by the method of hand marking at intraframe coding. The process of marking is performed by the following known instruments related to the hand marking methods:

"Pencil" - characteristic cells identification by marking of the cells at the video frame, represented at the screen, with the help of manipulator ("mouse");

"Rectangle" - identification of characteristic cells in the rectangular area at the frame by stretching of the rectangle representation to the areas of VO representation;

"Erasing" - cancellation of identification of VO cells;

"Magic wand" - identification of the cells, belonging to VO contour (similar to the "magic wand" tool in graphics editors Adobe Photoshop character.)

Characteristic cells marking out of VO at intraframe coding can be performed by marking of several characteristics cells at VO contour via the mentioned tools of hand marking with automatic determination of checkpoints of these characteristic cells, and other checkpoints are automatically determined according to the VO visual characteristics, for example brightness, contrast or color (Rudakov P.I., Safonov I.V. Processing of signals and images. Matlab. 5.x/ Under general edition Dr. Tech. V.G. Potemkin - M.: DIALOG - MIFI, 2000, 416 pp, (Application Packages; b.2), pp. 360-365).

Data array of interframe coding undergoes compression by including the information only about the displaced checkpoints with the displacement code thereof into the data array. (fig.5)

Data array of interframe coding can be subjected to compression using binary vector or linked list (Acho Alfred V., Hopkroft John A., Ulman Jeffery D. Data structures and algorithms.: Translated from English.: Tutorial- M.: "Williams Publishing House", 2000, 384 pp.: ill. - parall. Engl. Cue, ISBN: 5-8459-0122-7 (rus.), pp. 109-113).

Analysis of displacements (fig.6) of checkpoints, displaced in the same direction to the same distance is realized after compression with the use of binary vector or linked list, said displaced checkpoints are combined into groups of sequentially located checkpoints, said groups are further coded, specifying the number of checkpoints and the common displacement code thereof.

The video stream can be divided into logical fragments, with a slight varying VO set, in its dynamics and composition in each fragment. Further the fragments are divided into the consecution of scenes. Each scene is the continuous movement of VO. Each scene has distinctive features at the VO representation. Detection of these characteristics, common for all objects of the scene, is the significant process for coding, assisting to compress substantially structural information in a video frame, and in a scene too. The next level of video data is video frames, the scene is divided into. Here every VO is positioned and has the definite shape.

Rectangular integer grid (fig.1) with constant parameters (discrete steps across and verticals, width M and height N of cells) is formed. The sizes M and N of the grid are limited by the sizes of the video stream representation.

The X and Y coordinate system overlaid the grid. The cell belongs to VO, if the areas coincide completely or partially. As a result a binary bitmapped representation is obtained for VO. Such grid is formed for the whole video stream , and its parameters (the number of cells, defined by their width and height) depend on the required quality of the transmitted information. The VO locations, sizes, form, priority of representation thereof are included in the description of the VO. These characteristics can change over a consecution of frames. The VO shape is represented as 2d-image (fig.2). The informative component is a contour- a border, which necessary consists of one part without breaks and self-crossings, divides representation area into interior (finite) and exterior (infinite) areas. The area of representation is detected by estimating of maximal and minimal values of the VO checkpoints coordinates on X and Y axes, and local X' and Y' coordinate system is introduced therein.

The VO shape is represented by the array of checkpoints with the place of contour approximation. VO shape definition is performed at the stage of object marking in the video stream. The vector method of contour defining is used (fig.3). Initial checkpoint of the contour, for example the closest to the origin of local coordinate X' and Y' system of the representation area, and its local coordinates is set. Further the displacement of adjacent checkpoints concerning previous is sequentially detected. The advantage of vector format is in its simplicity, customizable accuracy of contour setting, in its ability of scaling of the image without quality loss and in effective algorithms of processing.

Vector format of visual objects is also universal from the point of view of present invention problem setting up as well as the description of borders of 2d-images.

VO contour is marked by checkpoints manually or automatically so that the difference between the real and the approximated border is minimal. The checkpoints on the following video frames are determined by the algorithms of VO authority, in other words checkpoints are determined by the previous data about contour with preliminarily set checkpoints and new grid approximation of VO. The contour approximation algorithm is set by the author, for example, at editing of active video stream.

The representation of the chosen VO in a video frame at the screen (for example, computer monitor) consists in highlighting of the present VO by grid approximation, in other words highlighting of cells which crosses with the interior area of VO.

The defined visual objects represent initial data for intraframe coding and interframe coding. Every VO in a video frame can change location, the sizes of the rectangle of representation, its shape completely or partially by the group of contour checkpoints, remain permanent. Also new VO can appear in a video frame and old ones can disappear. Visual objects can have coinciding cells. Scene objects can be subjected to affine transformation - standard movements of camera: zooming, rotating and movement of camera along straight line.

Format of coding is specified by the set of parameters for more flexible use of the declared method and possible technology of coding of visual objects, for example, in active video use. The part of parameters represents invariant characteristics for the hole video stream - geometrical parameters of approximation grid, common for all changed objects. Another part is the dynamically variable depending on the character of video stream scenes.

The following specification of coding format can be used as a possible variant.

Format can be described in the special formal grammar - the Backus normal form. The symbols in definitions "::=" mean "defined as". Separator "|" is used for alternatives. Symbol "+" at the end of expression means "one or more", symbol "*" means "zero or more" and "?" means "zero or one". Comments are added in the shape of: "<!-comment->" or "<language category> comment".

The selected structural information into special format of VO and composes XML-document. It consists of required title of the document and sequence of frames, composing scenes and anticipated by optional title of scene. Every frame, in its turn, consists of active VO list.

```
<VO document>::=
<document title>
(scene title? (VO frame)*)*
<document title>::=
<XML title> Document type
<V:32bit> Version/extension (V=1.0)
<N:32bit, M:32bit> Grid sizes
<Flags:32bit> Flag of settings
<scene title>::=
<T1 >Scene code
<!- Information for common for the present scene: settings, coding methods and method of border setting->
</T1> Exit code for scene title
<VO of frame>::=
<T2> List code of VO of frame
<32bit> Frame ordering information
<32bit> Length of coded information array in bytes
<coded information of VO of frame>
<N_OLD> Number of old VO
<VO format> *N_OLD
<N_NEW> Number of new VO
(<representation area of VO>
<VO format>)*N_NEW
</T2> Exit code of list of VO of frame
<area of VO representation>::=
<X:bit8, Y:bit8> Initial point of VO representation area
<W:8bit, H:8bit> Sizes of representation area in width and height
<1 D:bit8> VO identifier
<VO format>::=
[0] - No changes or save of previous movement!
<1> Changes take place
[1][0] No movement
[1]<1> Movement takes place
[1][1][0][x:8bit, y:8bit] Customary coordinates
[1][1]<10> One pixel displacements
[1][1][10][direct:3bit] displacement code O-N, 1-NE, 2-E , ..., 7-NW
[1][1]<11> Short coordinates
[1][1][11]<XX> Code of displacement length 00 - 3bit, 01 - 4bit, 10 - 5bit, 11 - 6bit
[1][1][11][01]<x:4bit, y:4bit> Signed displacement coordinates
<!-[X]::=[prefix]->
[X][0] Sizes are the same
[X]<1> Sizes has changed
[X][1][0]<...> Customary coordinates
[X][1][1][0]<...> One pixel displacements
[X][1][1][1]<...> Compressed coordinates
<!-[X]::=[prefix]->
[X][0] Shape is the same
[X]<1> Shape has changed
<format of shape change>
<format of shape change>::=
<!-Some VO settings can be set initially->
(<list type>::=
<T3> Binary vector
|<T4><2bit>
Linked list with capacity of pointers
)?
<coding settings on X-direction>?
<coding settings on Y-direction>?
(<displacement of checkpoint>)+
```

```
|(<displacement of interval of checkpoints)*
<settings of coding on axis>::=
<0> No coding
<1> Axis direction coding
[1]<displacement type>
<checkpoint displacement>::=
<checkpoint point symbol displacement>
<displacement of checkpoints interval>::=<interval><displacement>
<displacement>::=(<displacement type>)?<value of displacement>
```

Every video frame is supplied with a title, which contains either attendant or individual information. Format of frame object list of video is located after it. VO list is arranged by representation significance and by scene depth. A number of scene VO is set in coded title of the scene. Reference to VO is possible according to access priority list or to its identifier. New VO of a scene are described by the code of "new object" and are defined directly by dynamically full information. Old VO, subjected to delete, are coded by code "deletion". List of video frame VO contains coded information about all VO of the present video frame.

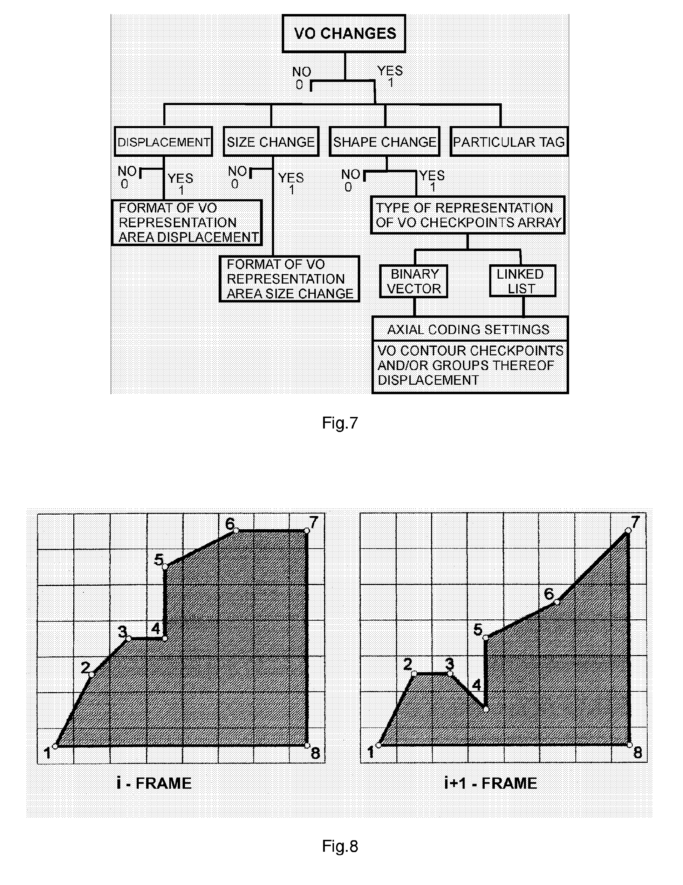

The scheme of VO coding is shown in fig.7. This format represents binary sequence of predetermined length. Minimal code for tags with often use is used in the format. It's optimized under minimal common changes of VO shape. Variants of VO coding format with different information concerning dynamics of shape changes is represented below.

```
{{0}                          <!- Object has not changed ->

{1000}{0000}          <!- Delete: special code ->

{110{'125'}{'-23'}00}     <!- Displace X + 125, Y – 23 ->

{1111{{00}{+3}{-2}}00}   <!- Displace X + 3, Y – 2 ->

{1110{NW}00>          <!- Displace X – 1, Y – 1 ->

<!-====================================->

(<!- New object ->)*

}
```

Code tags are used for selecting groups of visual objects and also groups of checkpoints of VO contour. Thus, coded common dynamics minimizes information about every VO, delegating it to the corresponding group.

```
<Block tag> <cod:4bit> <action format>?
(((<VO>*(<point>)*)(<Block tag><TO>)?)?
```

Block tag in each place must be marked with its different purpose, for example, zero displacement or appointed code. Examples of metadata represented below.

```
1. {1000}{0000}        <!- Delete object ->
2. (1000)(0001)         <!- Common displacement ->
   {<objects list>}
   {1000}
3. {1000}{1000}{XXXX} <..> {1000}{1000}{XXX}
   <!- This is metadata of metadata ->
```

Change of VO shape is shown at fig.8. Points with numbers 1, 2,7, 8 has not changed their location, point 3 has displaced one cell down, points 4, 5, 6 have displaced two cells down. The displacements in Y-direction are marked for points which have displaced.

A method of compression of data array with the help of binary vector. Code length of information is 32 bits.

```
{1001}        <!- Only shape has changed ->
{00}          <!- Binary vector ->
{0}           <!- No changes in X direction ->
{1}{11}{00} <!- Displacements in Y direction for 2 pixels ->
{0}{0}({1}{001})({1}{010})({1}{010})({1}{010}){0}{0}
```

I. The method of data array using of linked list with 2 bits pointers. The code length is 36 bits.

```
{1001}{01}{00}  <!- Linked list ->
{0}{1}{11}{00}  <!- Displacements in Y direction for 2 pixels
({10}{01})({01}{010})({01}{010})({01}{010})
```

```
{00} <!- End of list ->
```

II. A method of supplemental compression with use of analysis of common movement of first (I) compression method. The code length is 32 bits.

```
{1001}{00}{0}{1}{11}{00}
<11 0>{0}{0}({1}{001})  Initial tag – 3 individual points
<11 1>{010}  Initial tag – group of 3 points
<10 0>{0}{0}
```

III. A method of additional compression with use of analysis of general movement of second (II) compression method. The code length is 29 bits.

```
{1001}{01}{00}{0}{1}{11}{00}

({10}{001})

{01}{00}    <!- zero displacement is the block tag ->

{011}       <!- a number of interval points ->

{010}       <!- interval displacement ->
```

Calculation of VO coding efficiency method consists in detection of compression ratio of structural and dynamic VO information in video frames. Initial information about VO is set in bitmapped binary type at the approximation grid. Resulting information is the coded format of the initial information. The compression ratio equals the ratio of volume of the initial information to volume of the coded information. VO characteristics are given in tab. 1

Table 1 VO characteristics

| W, H | Sizes of the local coordinate system |
|---|---|
| $P=2(W+H)$ | Perimeter of representation area |
| K | A number of border checkpoints |
| L | Length of VO border |
| R | Checkpoint displacement vector of |
| V(R) | Displacement coordinates capacity |
| $V(x,y) = \log(W+H)$ | Checkpoint coordinates capacity |
| V | Binary bitmapped image volume |
| $V_{cod}$ | Coded information volume |
| $F=V/V_{cod}$ | Information compression coefficient |

Compression ratio at coding of the initial VO shape (intraframe coding).

Each contour checkpoint in vector format is set by displacement in local coordinate X' and Y' system. The sizes of this coordinate system determine the displacement capacity. Presuming that allocation of checkpoints over the contour to be uniform. Then the lengths of displacements will be equal for all checkpoints.

|R|=L/K. Capacity of displacement coordinates will be $V(R)=2*\log(L/K)$, where log means logarithm to the base to 2. The coded information length at all checkpoints will be $V_{cod}=K*V(R)=K*2*\log(L/K)$. Maximal value is achieved if K=L/e, where e=2,71828 the base of natural logarithm. Then $V_{cod}=(L/e)*2*\log(L/(L/e))=L*2/e*\log(e)=L*1,06 \approx L$. Let's do one more supposition, that the contour length is proportional to perimeter of the representation area L=kP with aspect ratio k=2. We'll get the following estimation for the volume of coded information $V_{cod}=L=kP=4(W+H)$. Volume of binary bitmapped image equals the square of the representation area V=W*H bits. For square areas (W=H) we'll get following ratio of data volumes:

$$F=V/V_{cod}=(W*H)/(4(H+W))=H*H/(8H)=H/8$$

For VO, going in the area of the following size $H^X W=16x16$ cells, we'll get f=16/8=2. Increasing the sizes of the area, we will simultaneously increase the data compression ratio. We see that for initial setting of VO shape or setting of VO with rapidly changing shape this method of coding is efficient.

Compression ratio at interframe coding

New shape of a border is transmitted for dynamic objects with changing of border points displacement more, than their vector setting by displacements relatively to adjacent points.

Let's make estimation in a case for which we'll accept displacement of 10% of contour checkpoints on one cell. Displaced checkpoints are coded by 3 bits of information in this case. Consequently, we'll get the following estimations

$$V_{cod}=10\%*K*3=0,1*L/e*3=0,3*4(W+H)/e=0,44(W+H)$$

$$F=V/V_{cod}=(W*H)/(0,44(W+H)))=(H*H)/0,88H=H/0,88=1,14H$$

And for H=16 we'll get compression ration f=18 times.

Additional compression of volume of coded information size will be achieved by applying common movement of VO and movement of groups of contour checkpoints.

Let's examine the case of common movement of Q contour checkpoints group to the adjacent cells. Such movement is coded by 3 bits. Thus, the ratio of additional compression equals:

$$f_{add}=V_{cod}/V_{add}=(Q*3)/3=Q$$

i.e. is proportional to the number of checkpoints involved in common movement. Coding of the new VO contour is based on observation, that borders of coordinates changing for any adjacent checkpoints are limited along with axis X' and Y'. Maximal values of these changes determine the capacity of displacements, taking into account the sign thereof. But the solution is taken in the direction of the corresponding coordinate representation, in any axis the length of such code is found to be more than the length of customary coordinates. Such cases will occur extremely rarely, they even may be removed by adding of additional checkpoints at the contour. The length of codes for one of the axes of the grid 256ˣ256 are given in table 2.

Table 2. The length of code for coordinate of one of the axes for grid sized 256x256 and for VO, set by 40 checkpoints.

| Length in bits | Code length for 40 points in bytes | |
|---|---|---|
| 8 | 80 | |
| 3 | 15 | |
| Displace $\pm1$ | 2 | 20 |
| ment on $\pm3$ | 3 | 30 |
| axis in $\pm7$ | 4 | 40 |
| the cells $\pm15$ | 5 | 50 |
| $\pm31$ | 6 | 60 |

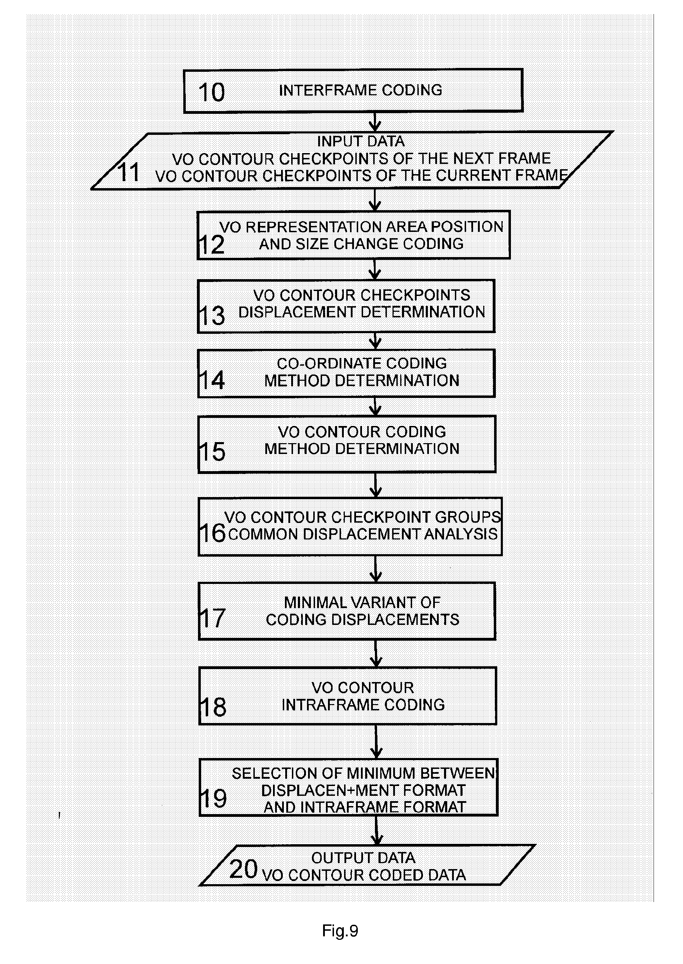

The algorithm of intraframe coding is realized in the following way (fig.9)

Unit 1. Procedure of coding. Determines coded information about the contour for every new VO. Consists of assistance procedures calls for every VO.

Unit 2. Input data for VO compose coordinates array of K contour checkpoints
Coordinates correspond to the location of checkpoint at the approximation grid.

Unit 3. If required, representation area of VO is detected. Maximal and minimal values of coordinates are calculated for this:
Xmin, Xmax, Ymin, Ymax.

Unit 4. Determination of the displacement of the coordinates origin of representation area:

$$X0=Xmin, \quad Y0=Ymin.$$

Unit 5. Determination of the sizes of representation area

$$W=Xmax-Xmin+1, \quad H=Ymax-Ymin+1$$

Unit 6. Determination of the initial checkpoint of the contour. Calculating the first point P (x,y) with ordinate y=Ymin for this purpose. Displacement $d^X0$ of this checkpoint from the beginning of representation area in X-direction is saved in dx0=x-X0.

Unit 7. Calculating the array of K displacements between adjacent checkpoints shape the initial point of border: dX[i]=X[i]-X[i-1], dY[i]=Y[i]-Y[i-1]
And values of maximal modulo displacements in X and Y directions:

$$DXmax=max\{abc(dX[i]\}, \quad DYmax=max\{abc(dY[i]\}.$$

Unit 8. The method of coding for each axis is determined. The capacities of DXmax and W are compared. If len (DXmax)+1 <len(W), then coding by displacements x[i]=dX[i] and code length in X-direction equals LX=lex(Dmax) +1, otherwise the local coordinates x[i]=X[i]-X0 and LX=len(W). Analogous actions are executed at coding of coordinates in Y-direction

Unit 9. Output data is the following:

Parameters of representation area - X0, Y0, $d^X0$;
Lengths of displacements code in LX-direction and LY-direction;
A number of checkpoints - K;
Arrays of coded coordinates of checkpoints - x[1:K], y[I:K].

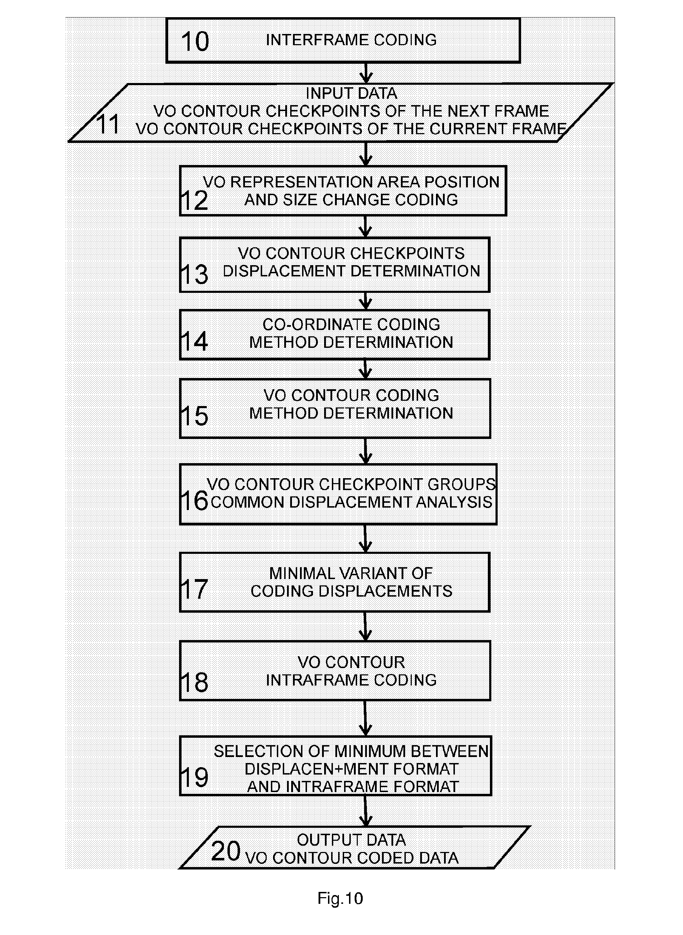

Algorithm of interframe coding is realized in the following way (fig. 10).

Local movements of contour checkpoints are analyzed for coding of shape changes. The absence or the presence of changes and displacements is marked for each checkpoint in the process of monitoring the checkpoints list. A number of checkpoints in the group and a displacement itself are coded for the common movement of checkpoints group.

Unit 10. Procedure of interframe coding of shape changes. It consists of additional procedures (units 11-22). The purpose of the procedure in coding for each already created VO of its transmitted changes at video frame.

Unit 11. Input data. VO is a coordinate array consisting K1 checkpoints of the present video frame Point1 [KI] with the marks about new and deleted checkpoints, K0 checkpoints of the previous video frame, Point0[K0] individual parameters.

Unit 12. Coding of location change and change of the representation area sizes.

Unit 13. Calculating of displacements at the present video frame relatively to the location at the previous frame for all contour checkpoints.

Unit 14. Detection of the coordinate coding method. The lengths of the displacements codes in X' and Y' is calculated according to maximal displacements taking displacement sign into account.

Unit 15. The volume of coded data for all types of contour checkpoints displacements presentation must be calculated, using the already set length of the code of checkpoints displacements in X' and Y' directions.

Unit 16. Analysis of common movement of contour checkpoints intervals. Additional coding of common displacements for all types of contour presentation.

Unit 17. A method minimal in volume of coded data must be chosen based on variants of presentation of checkpoints list.

Unit 18. Coding of VO as new. Calculating of the volume of coded data.

Unit 19. Comparison of displacement coding with coding VO as new. Choosing the least in data volume variant. (described above way 1 or 2).

Unit 20. Output data. A method of coordinates coding, a method of contour coding, coded data of contour checkpoints.

Since the order of coding of data array of VO checkpoints is detected and defined, the coding process is realized in reverse order. Decoding of the suggested format is performed structurally and provides monitoring (control) and tuning of a lot of parameters of decoding and particular data structure. This process has high performance and is error-tolerant.

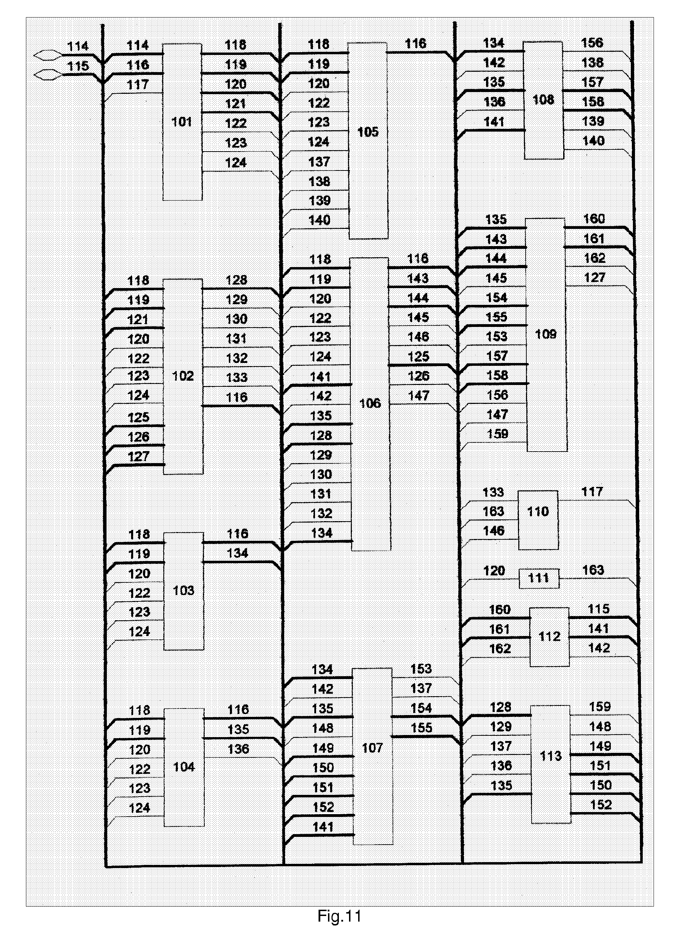

Maximal calculating resources at decoding fall on the process of VO building, which should be preferably realized by hardware environment for increasing of performance. At decoding the set of checkpoints for every video frame comes to device, said checkpoints are used for building of VO image i.e. the area occupied by the object at the screen, in computer memory (or receiver of digital TV signal or any digital play station). Device for decoding of the coded visual object (fig.11) contains the following units: kernel 101 of PCI bus controller, kernel 102 of direct memory access controller, register 103 of base address, operation-address register 104, state counter 105, unit 106, providing memory access from PCI controller, unit 107 for building of visual object contour according to checkpoints, unit 108 for filling of area inside visual object contour, memory stream s commutator 109, logical integration unit according to OR signals of data ready 110, trigger 111 of ready signals of register data, memory controller 112, unit 113 of control of unit 107 for building of visual object contour. Entries/exits of the mentioned units are connected by buses by means of typical connections, which are used in computer controllers and known from the techniques level. Units 101-106, 109-112 are typical. Units 107, 108, 113 are worked out according to the declared device. Unit 107 shape building of visual object contour is appropriate for creation of visual object contour according to checkpoints. Unit 108 for filling of area inside visual object contour is assigned for marking of cells inside the visual object contour. Unit 113 of control of unit 107 for building of visual object contour is assigned for control of functioning of unit 107 for building of visual object contour.

Buses PCI 114 and ZBT 115 are the entries and exits of the scheme. Bus PCI 114 is assigned for exchange of information with central processing unit and main PC memory. Bus ZBT 114 is assigned for exchange of information with local memory on base of memory chip of ZBT SRAM family, Micron firm

Kernel 101 of PCI bus controller is assigned for the device integration to PC via PCI bus. Kernel 101 provides processing of calls for write and read from memory by three address ranges BAR0, BAR1 and BAR2. Immediate values of diapason origin are assigned in the process of initialization of device in PC using Plug-n-Play. Call to the registers 103, 104, 105 accordingly BASE_ADR, CAMMAND and STATUS, which have the following addresses accordingly: BAR0+0x04, BAR0+0x08 and BAR0+0x0C is realized while call to the cells of memory of BAR0 address diapason. Total reset of the device is realized by transaction of writing via PCI bus on address BAR0+0x00. Access to the local memory of device is realized while call to memory cells of address range BAR1, if this access is permitted. Access to registers of kernel 102 of DMA controller is realized at call to cells of memory of BAR2 address range. Register 103 BASE_ADR is assigned for setting of base address of allocation in local memory of device of area, marked for building of visual object. While writing to the present register 103 signals of bus PCI 114 are transformed by kernel 101 of PCI controller. in local signals (coming on numbered buses at fig. 11) 118 of access to registers APP_ADR- local register address, APP_ADI 119- data for writing, T_BARHIT 120-a number of address range of call (1 - BAR0, 2 - BAR1, 4 - BAR2), APP_ MASTER 121 - operating mode, T_WR 122 - signal of writing, T_WE 123 - signal of writing maintenance. Address decoding at bus APP_ADR 118 is realized after one at zero bit of bus T_BARHIT 120, what means, that access to register 103, 104, 105 of device is realized. If the present address equals 0x04 and on line T_WR 122 value "one" is set, then "one" is output on line REG_DRDY 163, what means for kernel 101 of PCI controller, after integration by OR in unit 110 with other analogous signals DMA_DRDY 133 and MEM_DRDY 146 and receiving signal T_DRDY in width 17, that the register 103 BASE_ADR is ready for writing the value output on bus APP_ADI 119 in it. After this, writing in register 103 is permitted by kernel of controller after this by outputting of "one" on line T_WE 123. Mechanism is analogical at realizing of reading shape register 103, but after decoding of address and range number, at the presence of "one" on line T_RD 124, register 103 sets its own value on bus APP_ADO 116 simultaneously with outputting of "one" on line REG_DRDY 163. Kernel 101 of PCI controller sets contents of register 103 BASE_ADR on bus PCI 114 after getting signal T_DRDY 117.

Writing and reading in register 104 COMMAND is realized analogously but at that address 0x08 is decoded at the bus APP_ADR 118 and the signal with 5 beats delay T_WE 123 is output to the line Startln 136.

Register 105 STATUS is read-only accessible for PCI bus and has the address 0x0C. Register 105 STATUS is the integration of signals of buses DrawLine_Finish 137, Fill_Finish 138, Fill_Error 139 and Fill_int 140. Four bit word, composed of above mentioned signals, is set on bus PCI 115 at call to the present register 105.

Device realizes its work on the base of the contents of register 104 COMMAND. To set the new mode of work it's necessary to write the value of new command in the present register 104.

$0^X0$ - NOP no operation

The scheme passes into the standby mode at initialization of device at reset and at writing the value 0x0 into register 104 COMMAND, at that no calculations at device are realized, local memory for bus 115 is switched off and doesn't allow to realize change of the values stored in it.

$0^X1$ - memory access in target mode for read and write.

Commutator 109 MUX connects bus BURST_ADR 143 to bus MEM_ADR 160, bus BURST_DO 144 to bus MEM_DI 161, bus 145 BURST_WR to bus 162 MEM_WR at writing value $0^X01$ to register 104 COMMAND. Accordingly in their turn signals on buses BURST_ADR 143, BURST_DO 144, MEM_DO 141 and BURST_WR 162 are integrated with signals on buses APP_ADR 118, APP_ADI 119, APP_ADO 116, COMMAND 135 and T_WE 123 in the unit 106 BURST_BUFFER at appearance of "one' at the second digit of bus T_BARHIT 120. Thus, after signal on bus DRDY 142, which equals "one", and after signal output on bus MEM_DRDY 146, writing of information in local memory of the device via controller 112 of ZBT memory will take place at writing in BAR1. Access to information in local memory will be realized analogously at reading shape BAR1.

$0^X2$ - memory access in master mode for reading and writing

Analogously to the mode of memory access in target mode, but in the unit 106 BURST BUFFER bus BURST_ADR 143 will be connected to the inner counter of unit 106, the initial state of which is set by the value of signal BASE_ADR on the bus 134, bus BURST_DO 144 is connected to bus FIFO_out 128, bus FIFO_in 125 to bus MEM_DO 141, and on the base of transmitted signals on buses FIFO_out TE 129, FIFO_out_AE 130, FIFO_in_TF 131, FIFO_in_AF 132 and signal DRDY 142, the following signals will be calculated: signals MEM_WR 162 for writing and reading from the device of local memory, FIFO_in_WR 126 for writing the kernel 102 of DMA controller into queue and the signal FIFO_1_RD 147, which will be output at commutator 109 MUX in the presence of command 0x02 as a signal of bus FIFO_out_RD 127 for reading from kernel 102 of DMA controller queue. Thus, after tuning of kernel 102 of DMA controller for writing and reading of PC main memory, the data from local memory of device will be rewritten to PC common memory at reading from it or data from common memory will be send to local memory of device at writing in it. Providing of work modes of kernel 102 of DMA controller is realized by writing of the command information into its control registers which are accessible at call to addresses BAR2.

$0^X3$ - building of contour

While writing the value 0x3 into register 104 COMMAND with the help of commutator 109 MUX bus MEM_ADR 160 is connected to bus DrawLine_ADR 154, bus MEM_DI 161 is connected to bus DrawLine_DO 155, and signal of bus MEM_WR 162 is integrated with the signal DrawLine_WR 153. Signal of bus FIFO_2_RD 159, generated in unit 113 DrawLine Control, in commutator 109 MUX is integrated with the signal of bus FIFO_out_RD 127. Thus, after tuning of kernel 102 of DMA controller for reading of array of contour checkpoints and for appearing of signal StartIn, equal "one", the unit 113 DrawLine Control is activated. The present unit 113 realizes reading two first checkpoints from the queue of kernel 102 of DMA controller by the bus FIFO_out 128 in the case of equality of flag FIFO_out_TE 129 to zero. Unit 107 transforms them to immediate coordinates of origin and end of contour piece by outputting corresponding values to the buses X1 149, X2 150, Y1 151 and Y2 152. Unit 113 generates impulse, equal "one", one beat length, which serves for Starting unit 107 DrawLine, on line DrawLine_Start 148. "One" on line DrawLine_Finish 137 symbolizes end of work of unit 107 DrawLine, after receiving "one" on line DrawLine_Finish 137, unit 113 DrawLine Control realizes reading one more checkpoint from the queue of kernel 102 of DMA controller and outputs corresponding values for building the following contour piece on the buses X1 149, X2 150, Y1 151 and Y2 152. Thus, the work will continue till calculating of all checkpoints in the queue of kernel 102. Unit 107 DrawLine begins computation of coordinates for all other contour points after receiving signal of Starting by bus DrawLine_Start 148, at that reading of value, stored in memory, is realized from memory according to calculated coordinates and the value of signal on bus BASE_ADR 134, calculated points of contour piece are set to "one".

$0^X4$ - filling the area inside the built contour

While writing the value 0x4 into register 104 COMMAND with the help of commutator 109 MUX bus MEM_ADR 160 is connected to bus FILL_ADR 157, bus MEM_DI 161 to bus FILL_DO 158, and signal of bus MEM_WR 162 is integrated with the signal FILL_WR 156. Unit 108 FILL is activated after appearance of signal on bus StartIn 136. Unit 108 sequentially reads cells from memory, beginning from the address, stored in register 103 BASE_ADR, fills inner space of contour by symbols, for example by ones, and writes these cells to the old place in memory again. If errors, discovered hardwarily have taken place in the process of filling the area in the contour, then "one' would be output at line of bus Fill_Error 139, on completion of filling the area inside the contour signal, equal "one", on bus Fill_Finish 138 would be output, and signal, equal "one", on bus Fill_int 140.

$0^X5$ - modification of built contour

While writing the value 0x5 into register 104 COMMAND with the help of commutator 109 MUX bus MEM_ADR 160 is connected to bus DrawLine_ADR 154, bus MEM_DI 161 to bus DrawLine_DO 155, and signal of bus MEM_WR 162 is integrated with the signal DrawLine_WR 153. The signal on FIFO_2_RD 159, generated in unit 113 DrawLine Control in commutator MUX 109 is integrated with the signal on bus FIFO_out_RD 127. Thus, unit 113 DrawLine Control is activated after tuning of kernel 102 of DMA controller for reading of data array of modification of filled area and after appearance of the signal, equal "one" on bus 136 StartIn. Unit 113 realizes reading first checkpoint data for modification from the queue of kernel 102 of DMA controller by the bus FIFO_out 128 in the case of equality of flag FIFO_out_TE 129 to the zero. Unit 113 transforms this data to immediate coordinates of origin and end of contour piece by outputting corresponding values to the buses X1 149, X2 150, Y1 151 and Y2 152. Coordinates of the origin and the end of contour piece will coincide at that. After that unit 113 generates impulse, equal "one", one beat length, which serves for Starting unit 107, on line DrawLine_Start 148. "One" on line DrawLine_Finish 137 symbolizes end of work of unit 107 DrawLine, after receiving "one" on line DrawLine_Finish 137, unit 113 DrawLine Control realizes reading one more checkpoint data from the queue of kernel 102 of DMA controller and outputs corresponding values for modification of the following checkpoint on the buses X1 149, X2 150, Y1 151 and Y2 152. Thus, the work will continue till calculating of all points in the queue of kernel 102 of DMA controller. Unit 107 DrawLine realizes reading of value stored in memory after receiving signal of Starting by bus DrawLine_Start 148 and coordinates for modification of inner area of visual object contour, according to calculated coordinates and the value of signal on bus BASE_ADR 134. The calculated point in the present memory cell is set to "one', summed up by logical exclusive OR of unit 110, and with old value and with saving of the previous intact information is written in local memory of the device by bus 115.

0ˣ6 - cleaning of memory area for building of the contour

While writing the value 0x6 into register 104 COMMAND with the help of commutator 109 MUX bus MEM_ADR 160 is connected to bus FILL_ADR 157, bus MEM_DI 161 to bus FILL_DO 158, and signal of bus MEM_WR 162 is integrated with the signal FILL_WR 156.

Unit 108 FILL is activated after appearance of the signal on bus 136 StartIn. Unit 108 FILL sequentially reads the contents from the local memory cell, beginning from the address, stored in register 103 BASE_ADR and independently of the old contents, the cell fills the memory by zeros and writes the cell data again to the previous place. The signal, equal "one", will be output on bus Fill_Finish and the signal, equal "one" on the bus Fill_int 140 on work completion. Thus, all cells of the set area of local memory will be zeroed on work completion.

0ˣ7 - reserved

As evident from the description of scheme work (fig.11), unit 107 is executed with the ability of receiving checkpoints coordinates from PCI bus, approximation of VO contour and sending of data array about all points of VO contour to the ZBT bus. Unit 108 is executed with the ability of receiving data array about all points of the screen from the ZBT bus, marking of VO contour points and points, located inside the VO contour and transmitting of the data array about all points located inside VO contour to the ZBT bus. Unit 113 is executed with the ability of maintenance of sequence of checkpoints coordinates at presenting them to unit 107. Thus, the device provides forming of visual object contour according to checkpoints with help of unit 107, and marking of cells inside the VO contour with help of unit 108 for filling the area inside the visual object contour, and unit 107 control is realized by unit 113. Constructive execution of other units 101-106 and 109-112 is typical and known from the art.

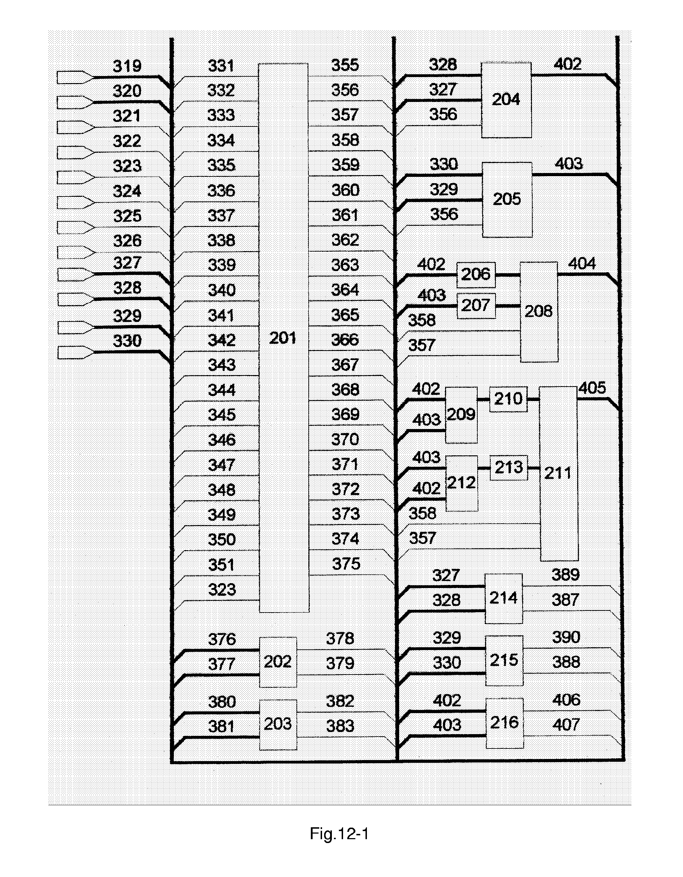

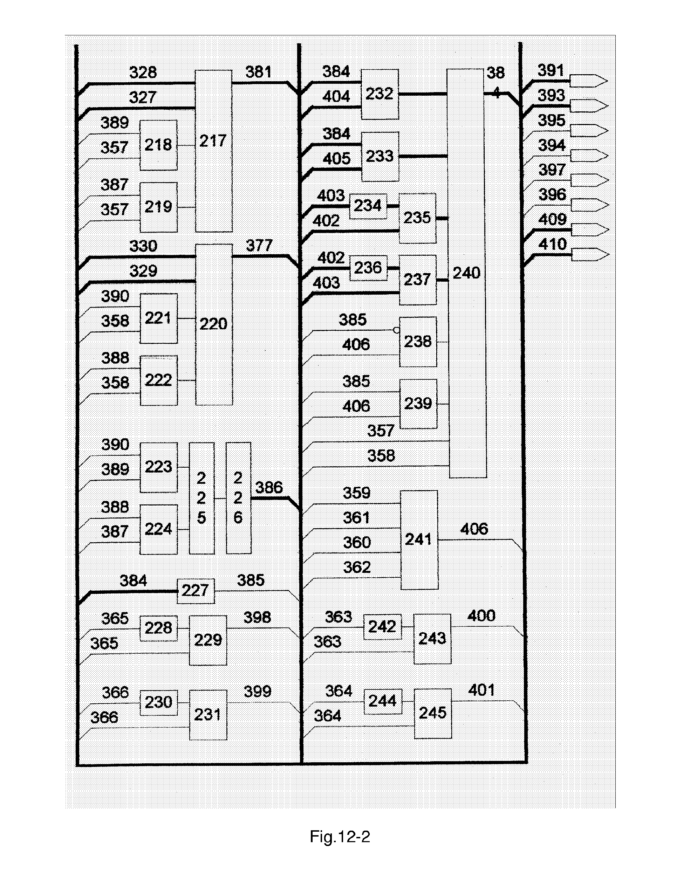

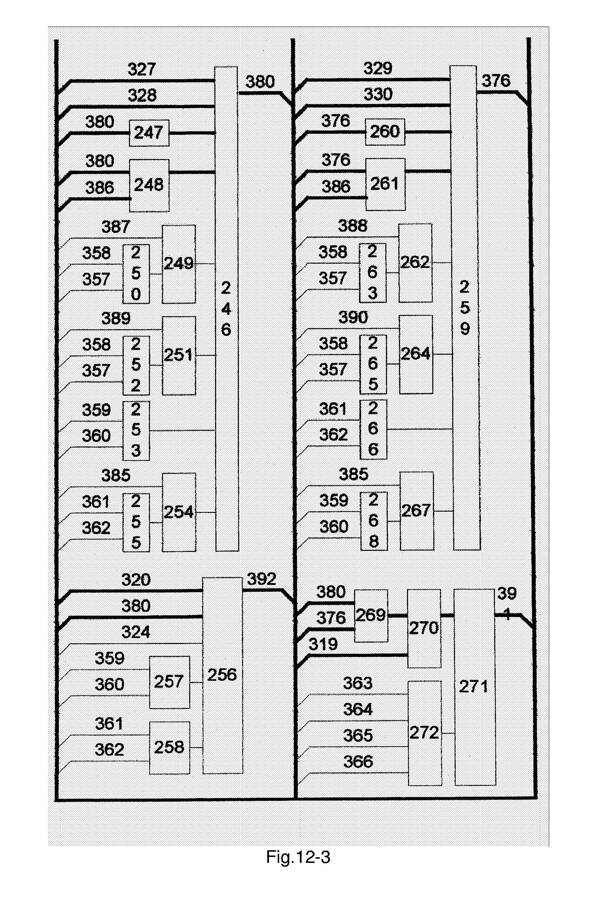

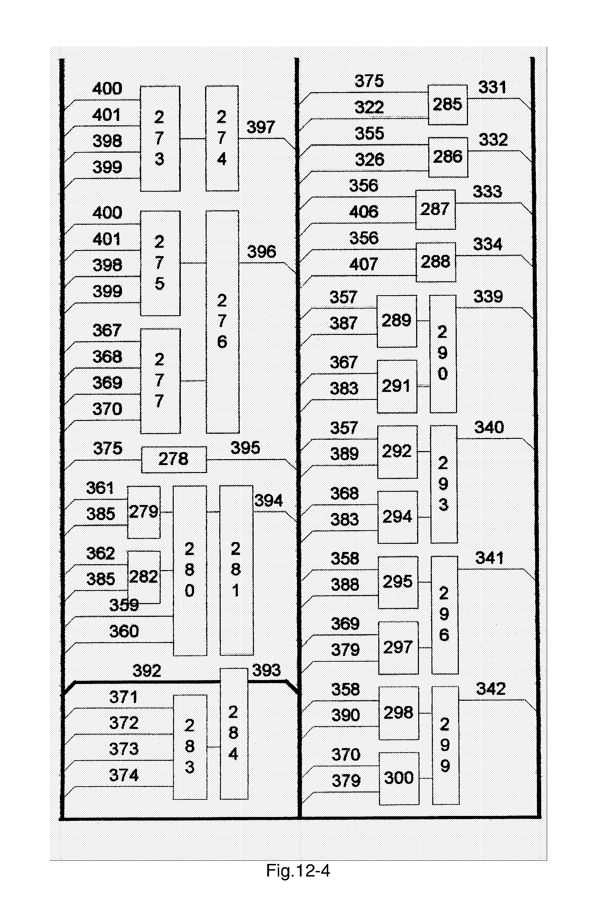

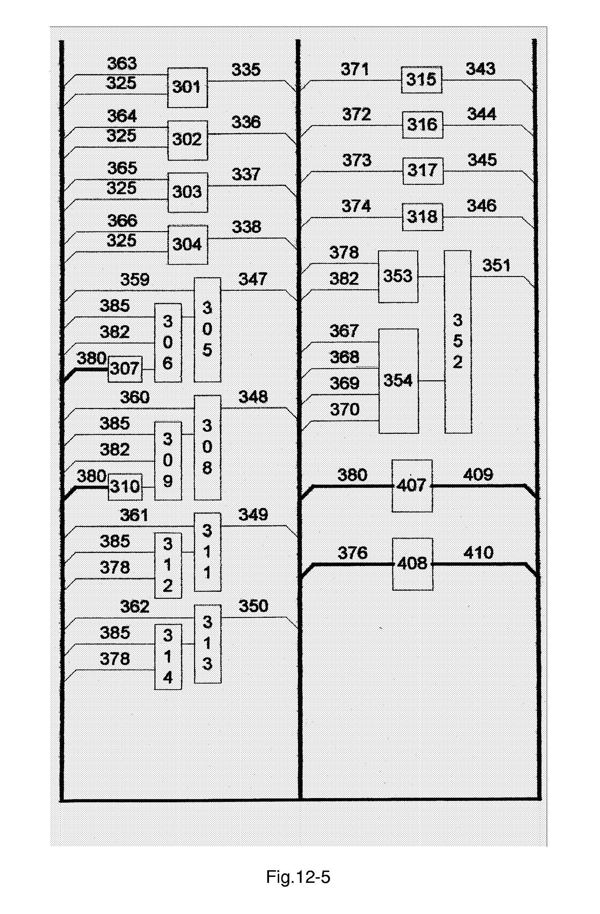

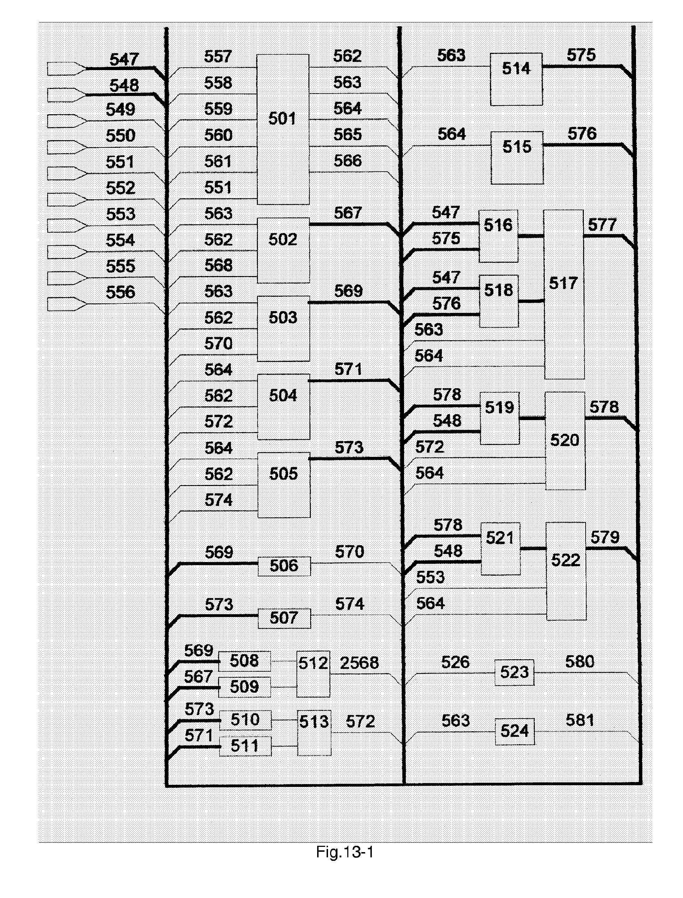

Unit 107 of building of visual object contour (fig. 12 on five pages, every page illustrates separate linked parts of the common scheme) comprises the following elements:

state counter (201, state REG),
comparator (202, 203, 214, 215, 216, 227, 307, 310),
accumulators (204, 205, 209, 212, 232, 233, 235, 237, 247, 248, 260, 261, 269, 270),
weight ratio register Inc I (208, Inc I REG),
doubler (206, 207, 210, 213, 234, 236),
weight ratio register Inc2 (211, Inc2 REG),
register of X coordinate of end checkpoint Xend (217),
register of Y coordinate of end checkpoint Yend (220),
AND element (218, 219, 221, 222, 223, 224, 229, 231, 238, 239, 243, 245, 249, 251,254,262,264,267,279,282,286,287,288,289,291,292,294,295,297,298, 300,301,302,303,304,305,304,311,313,315,316,317,318,352),
OR element (225, 241, 250, 252, 253, 255, 257, 258, 263, 265, 268, 272, 273, 275,277,280,283,285,290,293,296,299,306,309,312,314,353,354),
Modifier register S (226),
D-trigger (228, 230, 242, 244, 274, 278, 281),
weight ratio register D (240),
register of calculation of visual object X coordinate (246),
register of 32 points of bitmapped image of visual object data (256),

register of calculation of visual object Y coordinate (259),
address register ADR (271),
RS trigger (276),
register of output data of visual object Dout (284),
output register of visual object coordinate Xout (407),
output register of visual object coordinate Xout (408).

Description of inputs and outputs:

CLK (321) - input of global clock frequency,
RST (322) - input of global reset signal,
Start (326) - input of initiation of calculation process of coordinates of points of contour piece,
Enable (323) - work permission,
Estimate (324) - signal, detecting work mode for correction of visual object,
DRDY (325) - flag of the presence of data for processing at input,
BASE_ADR (31:0)(319) - base address of screen location in the local memory of device,
X1 (10:0)(327) - X coordinate of contour piece origin,
X2(10:0)(328) - X coordinate of contour piece end,
Y1 (10:0)(329) - Y coordinate of contour piece origin,
Y2(10:0)(330) - Y coordinate of contour piece end,
ADR (31:0)(391) - writing/reading address of calculated point of contour pieces,
DOUT (31:0)(393) - calculated 32 bits of visual object image,
Finish(395) - output, detecting the moment of end of contour piece building,
Pixel(394) - signal, masking calculation of the next point of contour piece,
RD(397) - signal, masking calls to memory for high-level reading,
RD_WR(396)- signal, masking calls to memory for low-level writing,
Xout(10:0)(409)- X coordinate of calculated point of contour piece,
Yout(10:0)(410)- Y coordinate of calculated point of contour piece.

Unit 107 Drawline for building of a VO contour realizes the modified Bresenham's algorithm. The coordinates of points, belonging to the piece of contour are calculated by piece-wise approximation so that at crossing of this memory with straight line y = const, this crossing is realized in only one point of raster. Value «one», summed up with the previous value according to logical OR is written at building of straight line (Estimate (324)=0) according to calculated coordinates. At VO correction (Estimate (324)=1) according to calculated coordinates, the value «one» summed up with the previous value according to exclusive OR is written. The scheme is built on the principle of finite-state machine. Machine can be in one of 21 possible states. The state Lwait (355) is the state of waiting of the work beginning. The state Lstart (356) is the first step of work. The state Lxmody (357) is the state of beginning of coordinates calculation with consecutive growth of VO X coordinate and calculation of the corresponding value of Y coordinate. The state Lymody (358) is the state of beginning of coordinates calculation with consecutive growth of VO Y coordinate and calculation of the corresponding value of X coordinate. The state LX1 Mody (359) is the state of calculation of X and Y coordinates at movement from checkpoint X1 to X2. The state LX2Mody (360) is the state of calculation of X and Y coordinates at movement from checkpoint X2 to X1. The state LY1 Mody (361) is the state of calculation of X and Y coordinates at movement from checkpoint Y1 to Y2. The state LY2Mody (362) is the state of calculation of X and Y coordinates at movement from checkpoint Y2 to Y1. The state LX1 Read (363) is the state of reading of the information stored in memory for inserting of the calculated points belonging to contour at movement from X1 to X2, to the memory. The state LX2Read (364) is the state of reading of the information stored in memory for inserting of the calculated points of contour piece at movement from X2 to X1, to the memory. The state LY1 Read (365) is the state of reading of the information stored in memory for inserting of the calculated points for contour piece at movement from Y1 to Y2, to the memory. The state LY2Read (366) is the state of reading of the information stored in memory for inserting of the calculated points for contour piece at movement from Y2 to Y1, to the memory. The state LX1 Step (367) - forming of 32bit cell taking old memory value and the calculated coordinates of new contour piece points at movement from checkpoint X1 to checkpoint X2 into account. The state LX2Step (368) - forming of 32bit cell taking old memory value and the calculated coordinates of new contour piece points at movement from checkpoint X2 to checkpoint X1 into account. The state LY1 Step (369) - forming of 32bit cell taking old memory value and the calculated coordinates of new contour piece points at movement of checkpoint from Y1 to Y2 into account. The state LY2Step (370) - forming of 32bit cell taking old memory value and the calculated coordinates of new contour piece points at movement from checkpoint Y2 to checkpoint Y1 into account. The state LX1 Write (371) is the state of writing of the new value of 32bit cell to the memory at moving from checkpoint X1 to X2. The state LX2Write (372) is the state of writing of the new value of 32bit cell to the memory at moving from checkpoint X2 to X1. The state LY1Write (373) is the state of writing of the new value of 32bit cell to the memory at moving from checkpoint Y1 to Y2. The state LY2Write (374) is the state of writing of the new value of 32bit cell to the memory at moving from checkpoint Y2 to Y1. The state Lend (375) is the state of end of the process of building of contour piece straight line. The following signals, transmitted by bus are used for setting of this or that state: SetLWait (331), SetLStart (332), SetLXMody (333), SetLYMody (334), SetLX1Read (335), SetLX2Read (336), SetLY1Read (337), SetLY2Read (338), SetLX1 Write (339), SetLX2Write (340), Set LY1Write (341), SetLY2Write (342), SetLX1 Mody (343), SetLX2Mody (344), SetLY1Mody (345), SetLY2Mody (346), SetLX1 Step (347), SetLX2Step (348), SetLY1Step (349), SetLY2Step (350), SetLEnd (351). The signals are formed at passing through logical elements marked at the scheme (fig. 12). Unit impulses appear at signals 398, 399, 400, 401 at appearance of values "one" at signals 363, 364, 365, 366. These impulses, one beat length, are assigned for forming of reading signals RD(397) and writing signals RD_WR(396). Unit 107 is in the state Lwait (355) at the initial stage of work. The scheme turns into the state Lstart (356) after receiving the value «one» at input 326 Start. The analysis of input checkpoints is realized in this state. The direction of the maximal change of corresponding coordinates is detected according the values of absolute difference of the corresponding coordinates. If DX (DX=ABS(X2-X1)) (402) at comparator (216) is more than DY (DY=ABS(Y2-Y1)) (403), further it'll be necessary to modify X coordinate (380) at each stage and to execute the calculation of Y coordinate (376) depending on the state of weight ratios (386, 404, 405, 384) while calculating of checkpoint coordinates. Otherwise vice versa. If DX>DY (406), the scheme turns in the state LXMody (357), otherwise, if DX<=DY (407), then the scheme turns into the state LYMody (358). The direction of movement is determined in new states, for the case, when DX>DY (406), X1 is less than X2 (387) or more (389), then point X1 will be accepted as the initial checkpoint of calculation algorithm and point X2 will be accepted as the end point Xend (217). Otherwise vice versa. For the case when DX<=DY, analogous actions are executed for Y coordinates and the values of buses 390 (Y1>=Y2, 329 and 330 correspondingly) and 388 vice versa are calculated. So, the calculation of weight ratios Inc1 (404), Inc2 (405), D (384), S (386) is realized in the states LXMody (357) and LYMody (358). The present ratios and the value of the second coordinate are calculated accordingly to the Bresenham's algorithm. The necessity of modifying of the coordinate with minimal change over the whole line is detected on the base of the values D (384). The analysis of the bus 384 value is executed at comparator 227 and the result is output to the bus 385. Unit 107 turns into the state of reading data shape memory after getting coordinates of the first checkpoint, after reading the new point is inserted to the cell, and if the next calculated checkpoint is situated not in the present cell of the local memory, writing of the obtained data to the memory is realized. The algorithm is realized as long as the required straight line is built by piece-wise approximation. The end of process of line building is detected by achievement of calculated point coordinates (buses 376 and 380) of finite values (buses 377 and 381). The present analysis is realized at comparators 202 and 203. The result is output on the buses 378, 379, 382 and 383 correspondingly. On completion of building the signal Finish (395), equal 1, is output and unit 107, passing through the state Lend (375), turns into the state Lwait (355) for waiting new data for building of the following contour piece. As described above, unit 107 allows to approximate the VO contour for transmitting the array of data about all contour points to the ZBT bus.

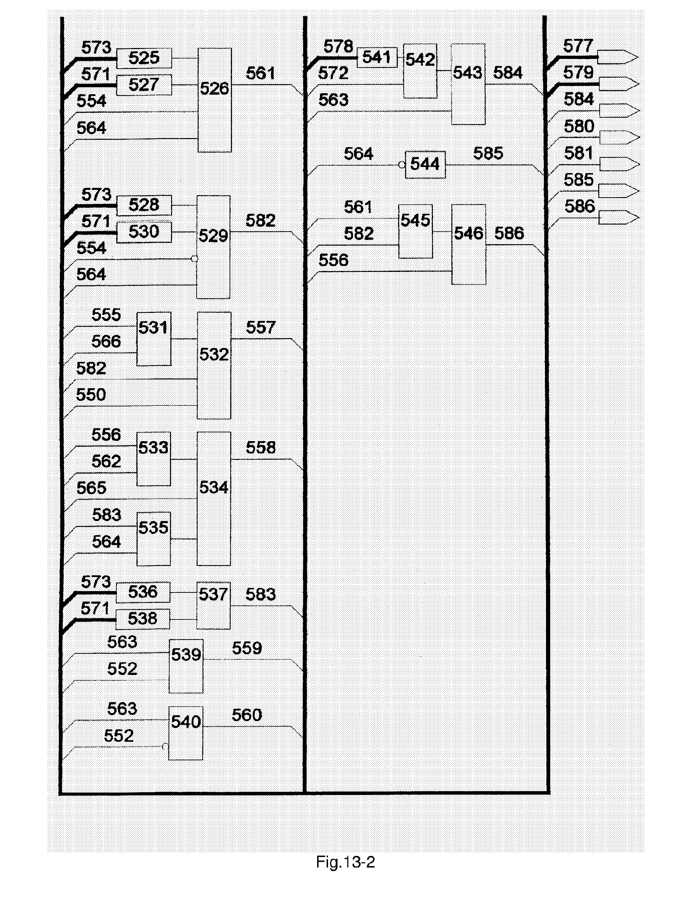

Unit 108 for filling the area inside the VO contour (fig. 13) is built on the principle of finite-state machine.

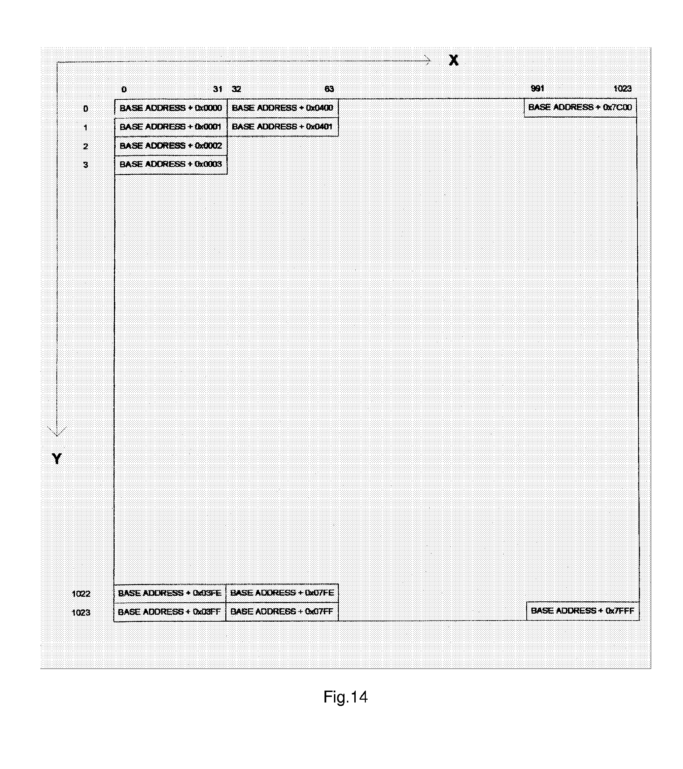

One cell contains 32 points of screen area. Location of cells according to the addresses and their correspondence to the points of screen representation is shown at fig. 14. Memory cells are located so that the movement on the screen is realized in columns. Information about 32 points of the screen is obtained at reading of i-cell, where i-the present number of the cell, and 32 flags are specified according to the above described algorithm of filling. The new value of the present cell and the transition to the cell i+1 are written on the base of these flags. The filling of the VO part, located in these 32 columns of the screen is executed after passing through all values of i from 0 till 1023. It will be necessary to pass to the following column of cells, storing the information of 32 adjacent columns of the image, after zeroing the flag (in principle the flag automatically becomes zeroed at the approaching to the last cell of the column, but if it doesn't equal zero, the error at building of the contour has taken place). So, all points belonging to the set VO area are colored after passing through all screen points.

Unit 108 comprises the following elements:

scheme state counter (501, State REG),
counter of X coordinate of reading VO points, located inside the contour (502, Xrd Count+32),
counter of Y coordinate of reading VO points (503, Yrd Count+1),
counter of X coordinate of writing (504, Xwr Count+32),
counter of Y coordinate of writing (505, Ywr Count+1),
comparator"<1023" (506, 507, 536),
comparator"=1023" (508, 510, 525, 528),
comparator"<991" (509, 511),

comparator"=992" (527, 530),
comparator"<992" (538),
comparator">0" (541),
logical AND (512, 513, 526, 529, 531, 533, 535, 539, 540, 542, 545),
logical OR (521, 532, 534, 537),
exclusive logical OR (519),
reading address counter (514, ADR_rd Count+1),
writing address counter (515, ADR_wr Count+1),
accumulator (516, 518),
register of call to memory address (517, ADR REG),
register of flags of filled points (520, Flags REG),
data register for memory writing (522, DO REG),
D-trigger (523, 524, 544),
RS-trigger (543, 546).

The description of inputs and outputs:

CLK (549) - input of global clock frequency,
RST (550) - input of global reset signal,
Enable (551) - signal of work permission,
Start (556) - input of Starting of cell filling inside the contour,
DRDY (552) - signals of presents of data for processing at input,
Erase (553) - signal, detecting the mode of screen clearing work,
INT_Enable (554) - signal, permitting output of interrupt signal at the end of work,
RESET_INT (555) - the signal of interruption reset,
BASE_ADR (31:0) (547) - base address of screen location in the local memory of the device,
D1 (31:0) (548) - the next 32 bits of image,
ADR (31:0) (577) - address for reading/writing of the next 32 bits of the image
DO (31:0) (579) - calculated 32 bits of the image,
ERROR (584) - flag, symbolizing error at filling the area inside the contour,
Finish (586) - output, detecting the end moment of filling of the area inside the contour,
RD_WR (585) - signal of writing/reading for presenting to the memory controller,
RD (581) - signal of reading for detecting the moment of data request,
INT (580) - signal of interruption, meaning the end of work.

The scheme of unit 108 is built on the principle of finite-state machine. FSM has 5 states, the states are set by register State REG (501) and are marked by value «one» at one of its outputs, corresponding to the set states.

The state Lwait (562) is the initial state of waiting of the FSM work beginning. The state LRead (563) is the state of reading of the cell with non-colored contour from memory. The state LWrite (564) is the state of writing of the cell with colored contour to memory. The state LWriteNOP (565) - the state of blank record, it is called at the beginning of FSM work for some times, but writing to memory is not realized until the data is not ready. The state Lint (566) - is the state of FSM work end. Signals SetLWait (557) are used for setting of this or that state of machine (at forming of this signal the part of function is calculated separately and forms signal 582), SetLRead (558) (at forming of this signal the part of function is calculated separately and forms signal 583), SetLWrite (559), SetLWriteNOP (560) and SetLInt (561), which are worked out accordingly to the chosen logical elements (fig. 13). The work of machine is possible, if signal Enable (551) equals "one". The passage from the state LWait (562) to the state Lread (563) takes place at appearance of the value «one» at input Start (556), at that the sum of base address BASE_ADR (547) and inner counter of reading address (514) is output to the output ADR (577), the value of which is output on bus 575, the value «one» is output to RD (581). Simultaneously the following changes take place: increase at one of the counter of reading address (514) and increase of values of counter of X and Y coordinate of reading (503 and 502) on 32 (if the value of counter 503 reached the value, equal 1023, and the value X don't exceed the value, equal 991, the result of comparison is output at signal 568) and on 1 correspondingly, if Y less than the value, equal 1023 ("one" to 270), the values of these counters are output on buses 567 and 569. Since the call to memory is pipelined and takes some time, the data from memory will appear at input DI (548) only after some beats, what is symbolized by the value «one» at input DRDY (552). And the machine turns into the state LwriteNOP (565) for one beat, because there are no data for processing, after this the machine returns to the state Lread (563). Call for the next codeword is executed again. After appearance of the value "one" at the input DRDY (552), FSM turns to the state Lwrite (564) after the state Lread (563), at that value DO (579) for writing is formed according to the logical elements (mentioned at fig.13), i.e. as the integration of read value DI (548) and values of flags (578) according to logical OR (521). At that DO (579) is set to zero value if the value "one" appears at input Erase (553). Modification of values of the writing address counter (515), the value of which is output to the bus 576, takes place in the same way as in the state Lwrite (564). The counters of X coordinate of writing and counters of Y coordinate of writing increased on 32 (if the value of counter 505 reached the value, equal 1023, and the value X don't exceed the value, equal 991, the result of comparison is output at 572) and on 1 correspondingly, if Y less than 1023 ("one" to 274), the values of these counter are ounput on buses 571 and 573, and address ADR (577) is calculated as the some of base address BASE_ADR (547) and the value of writing address counter, at that signal RD_WR (585) is set to the zero. In this way, writing of the new calculated value to memory is realized. The calculation of flags (520) values as integration of the previous flag value (578) and the new read value DI (548) according to logical exclusive OR takes place in the state Lwrite (564). Zeroing of counter of Y coordinate of reading and increase on 32 of the value of counter of X coordinate of reading (502) takes place on reaching of the value, equal 1023 , by this counter. The counters of X and Y coordinates of writing (504 and 505) are modified analogously. Forced zeroing of flag register (520) takes place on reaching of the value, equal 1023, by the counter of Y coordinate of reading (505), at that if its value did not equal zero to this moment, the signal Error (584) would be set in "one". FSM continues working, passing from the state Lread (563) to Lwrite (564) and back until the values of counters of X and Y coordinates of writing will not accept the values equal 992 and 1023 correspondingly, what means that all points of the screen area has been processed. If the signal Int_Enable (554) equals "one", FSM will turn into the state Lint (556) with simultaneous setting of "one" to output Int (580) and will stay at this state till appearance of "one" at input Reset_Int (555), after this it will turn into the state Lwait (562).

And if the signal Int_Enable (554) equals "zero", FSM will turn into the state Lwait (562) at once. In any case at such passages the value of the signal Finish (586) will set to "one", what means the finish of work of machine, this value of signal will not change till the following machine start.

Thus, unit 108 is executed with the ability of accepting of data array about all screen points, marking of VO contour points and points, located inside VO contour, for transmitting of the data array about all points, located inside VO contour, to the ZBT bus.

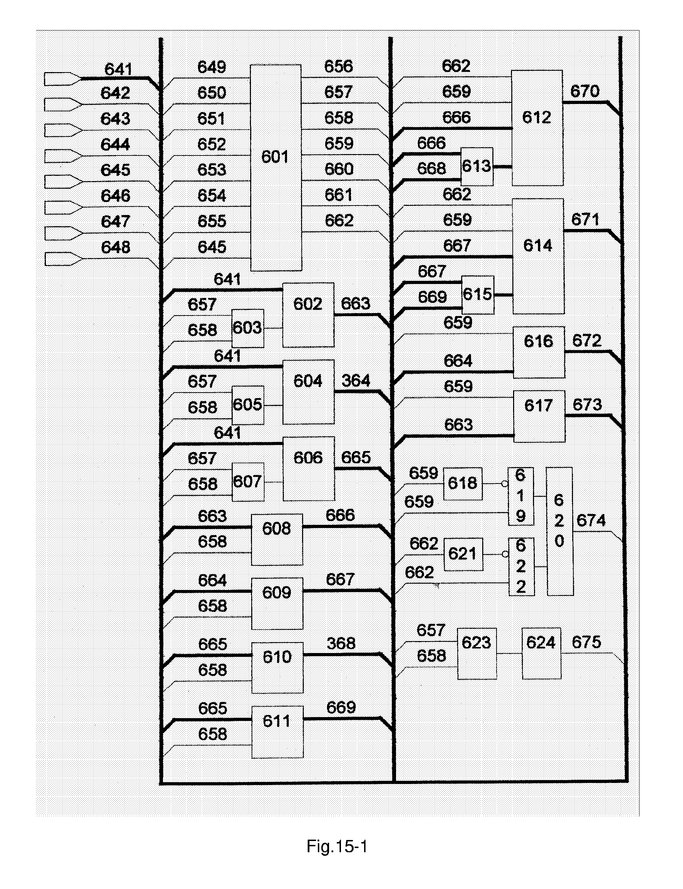

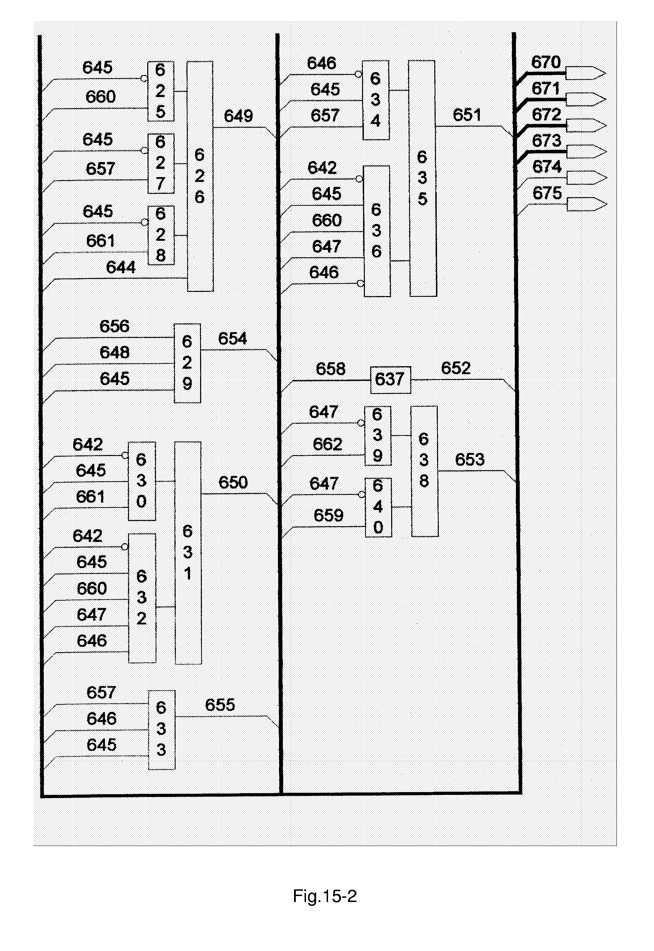

Unit 113 DrawLine Control (fig. 15) executes control of the work of unit 107. Unit comprises of the following elements:

State counter (601, State REG),
Intermediate register of X coordinate of checkpoint of the contour piece end (602, X2temp REG),
Intermediate register of Y coordinate of checkpoint of the contour piece end (604, Y2temp REG),
Intermediate register of X coordinate of checkpoint of the contour piece origin (608, X1temp REG),
Intermediate register of Y coordinate of checkpoint of the contour piece end (609, Y2temp REG),
Register of modification of the contour piece initial checkpoint (606, Move),
Register of change of X coordinate value of initial checkpoint of contour piece (610, DX),
Register of change of Y coordinate value of initial checkpoint of contour piece (611, DY),
Register of X coordinate of the contour piece initial checkpoint (612, X1),
Register of X coordinate of the contour piece end checkpoint (617, X2),
Register of Y coordinate of the contour piece initial checkpoint (614, Y1),
Register of Y coordinate of the contour piece end checkpoint (616, Y2),
Accumulator (613, 615),
D-trigger (618, 621, 624),
Logical OR (603, 605, 607, 620, 623, 626, 631, 635, 638),
Logical AND (619, 622, 625, 627, 628, 629, 630, 632, 633, 634, 636, 637, 639, 640).

The description of inputs and outputs:

CLK (643) - input of global clock frequency,
RST (644) - input of global reset signal,
Start (674) - output of initiation of calculation process of coordinates of points of contour piece,
Enable (645) - work permission,
Estimate (646) - signal, detecting work mode for correction of visual object,
FIFO_TE (642) - signal "True Empty" from input FIFO queue of the kernel 102 of DMA controller,
FIFO_In (31:0) (641) - output of input FIFO of queue of the kernel 102 of DMA controller,
Finish (647) - signal Finish from unit 107 DrawLine,
StartIn (648) - signal of start of the work on the contour construction,
FIFO_RD (675) - signal of reading queue of kernel 102 of DMA controller from FIFO
X1 (10:0) (670) - X coordinate of checkpoint of the contour piece origin,

X2 (10:0) (672) - X coordinate of checkpoint of the contour piece end,
Y1 (10:0) (671) - Y coordinate of checkpoint of the contour piece origin,
Y2 (10:0) (673) - Y coordinate of checkpoint of the contour piece end,

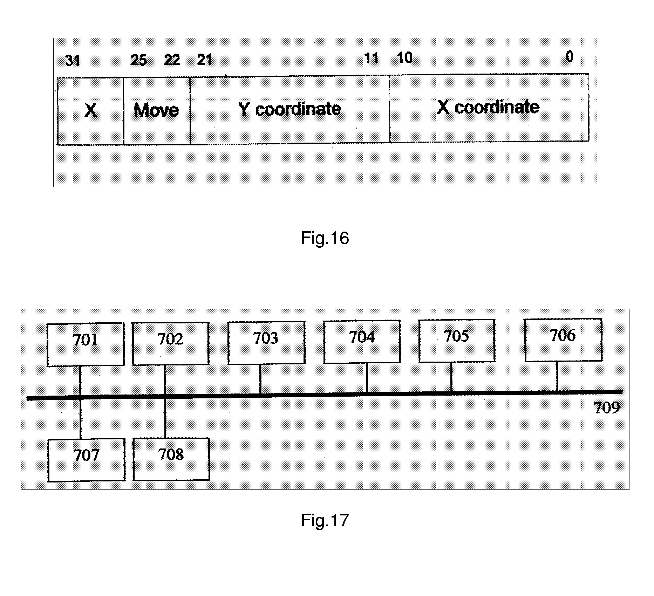

To build VO contour from the set of straight lines, for example at piece-wise approximation, its necessary to give coordinates of VO checkpoints to the unit 107 DrawLine. After giving of the intial checkpoint (X1:Y1) and the end checkpoint (X2:Y2), building the line and receiving the signal Finish (647), the previous end checkpoint becomes the initial checkpoint, the new reference checkpoint which is appointed by unit 113 as the end one, is obtained, at that modifications DX (668) and DY (669) for new initial point are calculated on the base of value of Move (665).
Format of checkpoint description is presented at fig. 16
X coordinate - X coordinate of the next checkpoint,
Y coordinate - Y coordinate of the next checkpoint,
Move - flag of change of X and Y coordinates of the present checkpoint at its appointed as initial point for contour piece building,
If:

Move=0, coordinates don't change,
Move=1, vector (DX, DY)=(0,-1) is added to coordinates (X,Y),
Move=2, vector (1,-1) is added to coordinates (X, Y),
Move=3, vector (1, 0) is added to coordinates (X, Y),
Move=4, vector (1, 1) is added to coordinates (X, Y),
Move=5, vector (0, 1) is added to coordinates (X, Y),
Move=6, vector (-1, 1) is added to coordinates (X, Y),
Move=7, vector (-1,0) is added to coordinates (X,Y),
Move=8, vector (-1,-1) is added to coordinates (X, Y),

This transformation allows to avoid the appearance of non-correct filling of cells inside the VO contour, at points at the place of connection of two lines. For VO correction, unit 13 gives the coordinates of the point for correction as the initial and the end points of contour, at that value "one" is set to the signal Estimate (646).

The scheme of unit 113 DrawLine_Control is built on the principle of finite-state machine. FSM has 7 states, the states are set by register State REG (601) and are marked by value «one» at one of its outputs, corresponding to the set states. The state Lwait (656) is the initial state of waiting of the FSM work beginning. The state LgetPoint1 (657) is the state of getting coordinates of the first checkpoint from the queue. The state LgetPoint2 (658) is the state of getting coordinates of the second checkpoint from the queue. The state LdrawLineStart1 (659) is the state of beginning of the contour piece building process. The state LdrawLine (660) is the state of process of building of the contour piece or modification of VO area. The state Lgo (661) is the state, previous to reception of the first checkpoint, serves for analyzing of the presence of data in the queue. The state LesimateStart (662) is the state of beginning of the process of VO area modification to set this or that state the following signals are used: SetLWait (649), SetLGetPoint1 (650), SetLGetPoint2 (651), SetLDrawLineStart (652), SetLDrawLine (653), SetLGo (654), SetLEstimateStart (655), they are produced according to the logical elements (fig. 15). The work of FSM is possible if the signal Enable (645) equals "one". The passage of FSM from the initial state LWait (656) to the state LGo (661) takes place at appearance of the value «one» at input StartIn (648), and if there is data in the input queue FIFO_in (641) (flag Fifo_TE (642) isn't equal "one"), the passage to the state LGetPoint1 (657) is realized and reading of the first word the queue to the intermediate registers X2temp (602), Y2temp (604) and Move (606) takes place. To read the codeword from the queue, the signal Fifo_RD (675) is set to "one". After reading the first word FSM turns into the state LgetPoint2 (658), if the signal Estimate (646) equals zero and into the state LestimateStart (662) otherwise. Transmitting of values from intermediate register X2temp (602), Y2temp (604) to the intermediate registers X1temp (608) and Y1temp (609) is realized in the state LgetPoint2 (658), also the calculation of values DX (610) and DY (611) on the base of contents of register Move (606) is done. Reading of the second codeword from the queue to the intermediate registers X2temp (602), Y2temp (604) and Move (606) is realized in the same way. After that, the passage to the state LdrawLineStart, with setting of the corresponding values of initial X1, Y1 (670, 671) and end X2 and Y2 (672 and 673) checkpoints to the registers, is realized. For the initial checkpoint its value is summed up by the accumulators (613, 615) with the value of its modification DX and DY (610 and 611) before writing of this value to the register. Having set coordinates, value "one" is given to the output Start (674), and the machine turns into the state LDrawLine (660). Having got "one" at input Finish (647), at the presence of data in queue and "zero" at the input Estimate(646), FSM turns into the state LgetPoint2 (658).In case of turning of FSM into the state LestimateStart (662) after the state Lget Point1 (657), the values of intermediate registers X2temp (663) and Y2 temp (664) are rewritten to the intermediate registers X1temp (666) and Y1temp (667). After this the value of intermediate registers X1temp (666) and Y1temp (667), without any modifications of the initial checkpoint, are given to the register of coordinates X1 (670), Y1 (671), X2 (673), Y2 (672). Having sent "one" to Start (674), automat turns into the state LdrawLine (660). From the present state, having got "one" at input Finish (647), at the presence of data in queue and at the presence of "one" at the input Estimate(646), FSM turns into the state LgetPoint1 (657). FSM continues working at the same way till the end of all checkpoints in the queue or till the signal Enable (645) cancellation.

The system for active video visualization (fig 17) contains net card 701, assigned for receiving of digital video stream , sending of the command traffic to the server of active video, TV receiver702, assigned for receiving of the digital video stream from TV centre, central processor 703, video decoder 704, assigned for decoding of the input video stream in real time mode and for output of the representation to the device, audio decoder 705, assigned for decoding of the input digital audio and for its output at the external system of sound reproduction, device 706 for decoding of coded visual object, executed according to fig.11, assigned for visual object contour creation according to checkpoints and for marking cells inside the visual object contour, storing device 707, assigned for storing of video, audio data, active video data and the system information, user interface 708. The components are connected with the system bus 709 PCI.

The system is assigned for reproduction of active video stream at TV screen or at other video information display device and for interactive control of information stream s in real time.

Active video stream enters hardware complex from the net to the net card 701 or from TV company to the TV receiver 702 or from the storing device 707. Central processor 703 divides the input data stream into 3 stream s: video stream , audio stream and the stream of active video script. Video stream is directed by central processor 703 to the video decoder 704, which transforms the packed format of digital video into the signal, required for replay of video series at display device (it isn't shown at fig 17, and connected to video decoder 704 by common way). Simultaneously, the central processor 703 sends the audio stream to audio decoder 705, which in its turn decodes the signal and outputs it to the sound reproducer (it isn't shown at fig 17, and connected to audio decoder 705 by common way). At the same time central processor 703 sends the stream of active video for decoding to the device 706. The device 706 unpacks the data and creates VO maps, presented at video frame at this moment. In case of interactive change of users of the process of active video script reproduction by means of user interface 708, central processor 703 addresses to the present VO map at the device 706, and depending on the object, chosen from several visual objects, sends query to the net or processes it locally, modifying thereby the input stream of active video. Revision device, and/or telecommunications network Internet and/or device of digital signal receipt of satellite and/or on-air and/or cable TV centre can be connected to the system of active video (fig. 17).

Mostly successfully the declared method for coordinate coding of video image moving at the computing device screen, a device for decoding of the visual object, encoded by this method and a system, assigned for visualization of active video by this device, are industrially applied in computer systems of active video or Hyper Video (HV), and also in such areas as interactive TV, video on request, TV broadcasting trough Internet, interactive tutorial systems, video conductors, personal mobile communications, computer and TV games.

**Claims**

1.  A method for coordinate coding of video image moving at the computing device screen, comprising

    - output of video frame with the image of at least one visual object to the screen,
    - division of said video frame with the visual object into X×Y cells, where X and Y coordinates - 0, 1, 2, ..., in the (form) shape of elementary squares or rectangles,
    - marking of the cells, which position coincide at video frame with the location of visual objects, by the first type mark,
    - marking of the cells, which position not coincide at video frame with the location of visual objects, by second type mark,
    - intraframe coding, comprising mapping for visual object data array of the new (next) current video frame formation, further comprising
    the data array saving of the current video frame with no changes, if the position of the visual object in the next video frame remains permanent, ,
    making changes in the current data array of said visual object if the position of the visual object in the next video frame changes;
    - forming and saving of the file, built by the map order, each said map corresponding to at least one video frame of the video file,
    said intraframe coding further comprising
    selecting of the characteristic cells, coinciding with visual object contour, said object contour subjecting to the shape changes,
    definition of checkpoint coordinates, said checkpoint coordinates being centers of said characteristic cells;

approximation of said visual object contour change between said checkpoints by setting up the local X' and Y' coordinate system, having fewer amount of cells than said initial X and Y coordinate system, the center of one of said cells taken as a origin of said X' and Y' coordinate system and axes set parallel and in the same direction as X and Y relatively;

- formation and storage of checkpoints data array in the local X' and Y' coordinate system, taking into consideration that

- if the position of the visual object in the next video frame remains permanent, the checkpoints data array of the current video frame in local X' and Y' coordinate system is saved with no changes at forming of the new map,

- if the geometrical shape and/or the position of the visual object in the next video frame changes,

- said visual object interframe coding is performed, said interframe coding comprising displacement vector parameters addition for all checkpoints of said visual object into the next video frame map data array, if the position of said visual object cells changes in the next video frame in the local X' and Y' coordinate system, and the contour thereof remaining permanent;

- said visual object intraframe coding of this video frame is performed said intraframe coding comprising checkpoints data array definition of the next video frame with the further determination of the relative inter-checkpoints displacements in the local X' and Y' coordinate system, if the contour changes in the local X' and Y' coordinate system and the position thereof remaining permanent.

2. The method, as recited in claim 1, where

- said visual object in the local X' and Y' coordinate system is geometrically bounded by the rectangle, said rectangle consisting of the same cells as in the X and Y coordinate system;
- said visual object is inscribed in the said rectangle;
- center of the coordinate X' and Y' origin is situated in the center of the rectangle corner cell and the axes directions coincide with that of the X and Y coordinate system relatively.

3. The method, as recited in claim 1, where piecewise-linear approximation is used at approximation.

4. The method, as recited in claim 1, where Bezje curves are used at approximation.

5. The method, as recited in claim 1, where cubic splines are used at approximation.

6. The method, as recited in claim 1, where marking of the characteristic cells of the visual object at intraframe coding is realized by means of hand marking.

7. The method, as recited in claim 1, where at intraframe coding, marking of said characteristic cells of the visual object is realized by pointing of several characteristic cells on the contour of visual object by hand marking tools with automatic identification thereof, with the further automatic intermediate checkpoints definition according to the visual parameters of said visual object.

8. The method, as recited in claim 1, where at the interframe coding the displacement code length in the X'-direction and Y'-direction for the next video frame is calculated according to checkpoint displacement array said displacement code in the X'-direction and Y'-direction is used as the data array for the interframe coding.

9. The method, as recited in claim 8, where said data array of the interframe coding is subjected to compression by applying data about the displaced checkpoints with the code of displacement thereof into the data array.

10. The method, as recited in claim 9, where said data array of the interframe coding is compressed using of binary vector.

11. The method, as recited in claim 10, further comprising the displacement analysis for checkpoints, displaced in the same direction within the same distance, said checkpoints being clustered in groups of sequentially situated ones, said groups being then coded, pointing the number of checkpoints and common displacement code thereof.

12. The method, as recited in claim 9, where said data array of the interframe coding is compressed by using of the linked list.

13. The method, as recited in claim 12, further comprising the displacement analysis for checkpoints, displaced in the same direction within the same distance, said checkpoints being clustered in groups of sequentially situated ones, said groups being then coded, pointing the number of checkpoints and common displacement code thereof.

14. The method, as recited in claim 1, where data array of intraframe coding and data array of interframe coding are compared in each video frame for the visual object, and if the data array of intraframe coding is smaller than the data array of interframe coding, the checkpoints data array of intraframe coding is saved in the map of said video frame with the further use thereof for data array forming of interframe coding of the next frames.

15. A device for decoding of the coded visual object, containing units - PCI bus controller kernel, kernel of controller of direct memory access, register of base address, state counter, instruction register, memory access unit from the direction of PCI controller, unit for building of visual object contour according to the checkpoints, in which visual object contour subjects to changes of shape, control unit for the unit for visual object contour building, unit for filling the area inside the visual object contour, memory controller, memory streams commutator, unit of logical integration of data readiness signals according to OR, trigger of readiness signals of register data, said units entries/exits being connected by buses by typical contacts for the said units, and said unit for building of the visual object contour is assigned for visual object contour building according to said checkpoints and realized with the ability of checkpoints coordinates receiving from the PCI bus, approximation of the visual object contour and the data array relating to all contour points transmitting to ZBT bus, unit for filling the area inside the contour of visual object is assigned for marking of the cells inside the visual object contour and implemented with the ability of receiving of the data array about all screen points from the ZBT bus, selection of visual object contour points and points, situated inside said visual object contour, and transmitting said data array about all points inside the contour of visual object to ZBT bus, control unit for the unit of building of the visual object contour is implemented with the ability of supporting of the order of said checkpoint coordinates at delivery thereof to said unit for building of visual object contour.

16. A system for video visualization, containing network controller, assigned for receiving of digital video stream and sending of command traffic to active video server, TV receiver, assigned for receiving of digital video stream from television centre, central processing unit, video decoder, assigned for decoding of input video stream in real time mode and output on the display device, audio decoder, assigned for decoding of input digital audio data stream with the further (and) output thereof on the outer system of sound representation, device for decoding of the coded visual object as recited in claim 15, assigned for visual object contour building according to checkpoints and marking of cells inside said visual object contour, storage device, assigned for storing of video and/or audio data, active video data and the system information, user interface, connected with the PCI system bus.

GRID CELL                    IMAGE PIXEL

X, Y Co-ORDINATED
GRID ORIGIN

CELL CENTRE

0  1  2 ...                                      M-2  M-1    X

0
1
...

Y'

Y'

X'

N-2
N-1

Y

LOCAL X', Y'
CO-ORDINATED
SYSTEM ORIGIN          VISUAL
RECTANGULAR AREA FOR   OBJECT - VO
VO DISPLAY WITH THE LOCAL
X', Y' CO-ORDINATED GRID

RECTANGULAR GRID OF NxM
SIZE WITH THE X, Y
CO-ORDINATED GRID

Fig.1

Fig.2

Fig.3

Fig.4

Fig.5

Fig.6

```
                    ┌─────────────────┐
                    │   VO CHANGES    │
                    └─────────────────┘
                  NO              YES
                  0               1
         ┌──────────┬─────────────┴────────────┬──────────────┐
   ┌───────────┐┌───────────┐┌───────────────┐┌──────────────┐
   │DISPLACEMENT││SIZE CHANGE││ SHAPE CHANGE  ││PARTICULAR TAG│
   └───────────┘└───────────┘└───────────────┘└──────────────┘
   NO     YES    NO    YES     NO      YES
   0      1      0     1       0       1
   ┌──────────────┐          ┌──────────────────────┐
   │FORMAT OF VO  │          │TYPE OF REPRESENTATION │
   │REPRESENTATION│          │OF VO CHECKPOINTS ARRAY│
   │AREA DISPLACEMENT│       └──────────────────────┘
   └──────────────┘              ┌────────┴────────┐
         ┌──────────────┐    ┌─────────┐      ┌────────┐
         │FORMAT OF VO  │    │ BINARY  │      │ LINKED │
         │REPRESENTATION│    │ VECTOR  │      │  LIST  │
         │AREA SIZE CHANGE│  └─────────┘      └────────┘
         └──────────────┘         └────────────┘
                          ┌──────────────────────────┐
                          │ AXIAL CODING SETTINGS     │
                          ├──────────────────────────┤
                          │ VO CONTOUR CHECKPOINTS    │
                          │ AND/OR GROUPS THEREOF     │
                          │ DISPLACEMENT              │
                          └──────────────────────────┘
```

Fig.7

i - FRAME          i+1 - FRAME

Fig.8

29

```
┌─────────────────────────────────────────┐
│ 10      INTERFRAME CODING                │
└─────────────────────────────────────────┘
                    │
                    ▼
     ╱─────────────────────────────────────────────╲
    ╱          INPUT DATA                            ╲
   ╱  VO CONTOUR CHECKPOINTS OF THE NEXT FRAME        ╲
  ╱ 11  VO CONTOUR CHECKPOINTS OF THE CURRENT FRAME  ╱
 ╱─────────────────────────────────────────────────╱
                    │
                    ▼
        ┌─────────────────────────────────────┐
        │    VO REPRESENTATION AREA POSITION   │
        │ 12     AND SIZE CHANGE CODING        │
        └─────────────────────────────────────┘
                    │
                    ▼
        ┌─────────────────────────────────────┐
        │      VO CONTOUR CHECKPOINTS          │
        │ 13  DISPLACEMENT DETERMINATION       │
        └─────────────────────────────────────┘
                    │
                    ▼
        ┌─────────────────────────────────────┐
        │      CO-ORDINATE CODING              │
        │ 14   METHOD DETERMINATION            │
        └─────────────────────────────────────┘
                    │
                    ▼
        ┌─────────────────────────────────────┐
        │      VO CONTOUR CODING               │
        │ 15   METHOD DETERMINATION            │
        └─────────────────────────────────────┘
                    │
                    ▼
        ┌─────────────────────────────────────┐
        │   VO CONTOUR CHECKPOINT GROUPS       │
        │ 16 COMMON DISPLACEMENT ANALYSIS      │
        └─────────────────────────────────────┘
                    │
                    ▼
        ┌─────────────────────────────────────┐
        │      MINIMAL VARIANT OF              │
        │ 17   CODING DISPLACEMENTS            │
        └─────────────────────────────────────┘
                    │
                    ▼
        ┌─────────────────────────────────────┐
        │      VO CONTOUR                      │
        │ 18   INTRAFRAME CODING               │
        └─────────────────────────────────────┘
                    │
                    ▼
        ┌─────────────────────────────────────┐
        │  SELECTION OF MINIMUM BETWEEN        │
        │ 19  DISPLACEN+MENT FORMAT            │
        │      AND INTRAFRAME FORMAT           │
        └─────────────────────────────────────┘
                    │
                    ▼
       ╱─────────────────────────────────────╲
      ╱         OUTPUT DATA                    ╲
     ╱ 20  VO CONTOUR CODED DATA              ╱
    ╱─────────────────────────────────────────╱
```

Fig.9

```
┌────────────────────────────────────────────────┐
│ 10        INTERFRAME CODING                     │
└────────────────────────────────────────────────┘
                      │
                      ▼
╱─────────────────────────────────────────────────╲
│              INPUT DATA                           │
│   VO CONTOUR CHECKPOINTS OF THE NEXT FRAME       │
│ 11  VO CONTOUR CHECKPOINTS OF THE CURRENT FRAME  │
╲─────────────────────────────────────────────────╱
                      │
                      ▼
┌────────────────────────────────────────────────┐
│    VO REPRESENTATION AREA POSITION              │
│ 12     AND SIZE CHANGE CODING                   │
└────────────────────────────────────────────────┘
                      │
                      ▼
┌────────────────────────────────────────────────┐
│      VO CONTOUR CHECKPOINTS                     │
│ 13  DISPLACEMENT DETERMINATION                  │
└────────────────────────────────────────────────┘
                      │
                      ▼
┌────────────────────────────────────────────────┐
│        CO-ORDINATE CODING                       │
│ 14   METHOD DETERMINATION                       │
└────────────────────────────────────────────────┘
                      │
                      ▼
┌────────────────────────────────────────────────┐
│        VO CONTOUR CODING                        │
│ 15   METHOD DETERMINATION                       │
└────────────────────────────────────────────────┘
                      │
                      ▼
┌────────────────────────────────────────────────┐
│   VO CONTOUR CHECKPOINT GROUPS                  │
│ 16 COMMON DISPLACEMENT ANALYSIS                 │
└────────────────────────────────────────────────┘
                      │
                      ▼
┌────────────────────────────────────────────────┐
│        MINIMAL VARIANT OF                       │
│ 17   CODING DISPLACEMENTS                       │
└────────────────────────────────────────────────┘
                      │
                      ▼
┌────────────────────────────────────────────────┐
│         VO CONTOUR                              │
│ 18    INTRAFRAME CODING                         │
└────────────────────────────────────────────────┘
                      │
                      ▼
┌────────────────────────────────────────────────┐
│  SELECTION OF MINIMUM BETWEEN                   │
│    DISPLACEN+MENT FORMAT                        │
│ 19  AND INTRAFRAME FORMAT                       │
└────────────────────────────────────────────────┘
                      │
                      ▼
╱─────────────────────────────────────────────────╲
│             OUTPUT DATA                           │
│ 20   VO CONTOUR CODED DATA                        │
╲─────────────────────────────────────────────────╱
```

Fig.10

Fig.11

Fig.12-1

Fig.12-2

Fig.12-3

Fig.12-4

Fig.12-5

Fig.13-1

Fig.13-2

Fig.14

Fig.15-1

Fig.15-2

| 31 | 25 22 21 | 11 10 | 0 |
|---|---|---|---|
| X | Move | Y coordinate | X coordinate |

Fig.16

Fig.17

## INTERNATIONAL SEARCH REPORT

| | International application No. |
|---|---|
| | PCT/RU 2003/000485 |

| A. CLASSIFICATION OF SUBJECT MATTER | | |
|---|---|---|
| G06T 9/20, 1/20 | | |

According to International Patent Classification (IPC) or to both national classification and IPC -7:

| B. FIELDS SEARCHED | | |
|---|---|---|

Minimum documentation searched (classification system followed by classification symbols) -7:

G06T 1/00,1/20,9/00,9/20,13/00, G06F 17/30

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | RU 2173883 C2 (SON IN SUN et al) 20.09.2001 | 1-16 |
| A | WO 1998/044435 A1 (INTERNATIONAL BUSINESS MACHINES CORPORATION) 8 October 1998 (08.10.1998) | 1-16 |
| A | RU 2045095 C1 (GROPPEN VITALY OSKAROVICH et al) 27.09.1995 | 1-16 |
| A | JP 11-161811 A (HITACHI DENSHI LTD) 18.06.1999 | 1-16 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 January 2004 (08.01.2004)** | **12 Febrary 2004 (12.02.2004)** |
| Name and mailing address of the ISA/ | Authorized officer |
| Facsimile No. | Telephone No. |

Form PCT/ISA/210 (second sheet) (July 1992)